# EUROPÄISCHE PATENTANMELDUNG

(11) **EP 0 620 386 A1**
(43) Veröffentlichungstag der Anmeldung: **19.10.1994**
(21) Anmeldenummer: 94104642.7
(22) Anmeldetag: 24.03.1994
(51) Int. Cl.: F16H 61/28

(54) **Stellantriebssystem für Schaltgetriebe von Kraftfahrzeugen**

(30) Priorität: 10.04.1993 DE 4311855
(71) Anmelder: HYDRAULIK-RING ANTRIEBS- UND STEUERUNGSTECHNIK GmbH, D-72622 Nürtingen (DE)
(72) Erfinder: Tischer, Dieter, D-73240 Wendlingen (DE); Trzmiel, Alfred, D-72661 Grafenberg (DE)
(74) Vertreter: Jackisch-Kohl, Anna-Katharina

(57) **Zusammenfassung**

Zum Verstellen der Schaltwelle (96h) sind zwei miteinander zusammenwirkende Stellantriebe (100h, 101h) vorgesehen, von denen der eine Stellantrieb (100h) zum Verschieben und der andere Stellantrieb (101h) zum Verdrehen der Schaltwelle (96h) vorgesehen ist. Mit diesem Stellantriebssystem ist es möglich, sowohl für ein handbetätigtes als auch für ein automatisch zu schaltendes Getriebe nur eine einzige Getriebeausführung zu verwenden. Mit den beiden Stellantrieben (100h, 101h) läßt sich die Schaltwelle (96h) so betätigen, daß die jeweiligen Gassen und Gänge geschaltet werden. Die beiden miteinander zusammenwirkenden Stellantriebe (100h, 101h) ersetzen den bei handbetätigten Schaltgetrieben im Kraftfahrzeug vorgesehenen Schalthebel und das entsprechende Schaltgestänge.

## Beschreibung

Die Erfindung betrifft ein Stellantriebssystem für Schaltgetriebe von Kraftfahrzeugen nach dem Oberbegriff des Anspruches 1 bzw. 14.

In Kraftfahrzeugen werden die verschiedenen Gänge mit einem von Hand zu bedienenden Schalthebel eingelegt. Es gibt auch automatisch schaltende Getriebe, die jedoch eine völlig andere konstruktive Ausbildung haben als die Handschaltgetriebe. Darum müssen zwei völlig verschiedene Getriebeausbildungen gefertigt und montiert werden. Ferner müssen für beide Getriebetypen Ersatzteile auf Lager gehalten werden.

Der Erfindung liegt die Aufgabe zugrunde, ein Stellantriebssystem zu schaffen, mit dem für die Handschaltung und für die automatisierte Schaltung nur eine einzige Getriebeausbildung erforderlich ist.

Diese Aufgabe wird beim gattungsgemäßen Stellantriebssystem erfindungsgemäß mit den kennzeichnenden Merkmalen des Anspruches 1 bzw. 14 gelöst.

Mit dem erfindungsgemäßen Stellantriebssystem ist es möglich, sowohl für ein handbetätigtes als auch für ein automatisch zu schaltendes Getriebe nur eine einzige Getriebeausführung zu verwenden. Bei einer Ausbildung entsprechend Anspruch 1 hat das Getriebe eine einzige Schaltwelle, die mit den Stellantrieben so betätigt werden kann, daß die jeweiligen Gassen und Gänge geschaltet werden. Die beiden miteinander zusammenwirkenden Stellantriebe ersetzen den bei handbetätigten Schaltgetrieben im Kraftfahrzeug vorgesehenen Schalthebel und das entsprechende Schaltgestänge.

Soll ein solches Schaltgetriebe weiterhin von Hand betätigt werden, dann ist eine andere Getriebeausbildung nicht erforderlich, sondern es können vom Kraftfahrzeughersteller in bekannter Weise der Schalthebel und das erforderliche Schaltgestänge verwendet werden, die mit dem Schaltgetriebe in bekannter Weise verbunden werden. Dadurch muß der Kraftfahrzeughersteller für die handgeschaltete sowie für die automatisierte Version des Schaltgetriebes nur eine einzige Ausführungsform eines Schaltgetriebes fertigen und montieren. Je nach Wahl des Kunden wird dieses Schaltgetriebe mit der herkömmlichen Handhebelschaltung verbunden, oder es wird die automatisierte Version mit den beiden miteinander zusammenwirkenden Stellantrieben verwendet.

Bei der Ausführungsform gemäß Anspruch 14, bei der das Schaltgetriebe wenigstens zwei Schaltwellen aufweist, ist jeder Schaltwelle jeweils ein Stellantrieb zugeordnet, mit dem die Schaltwelle in der erforderlichen Weise betätigt wird.

Infolge der erfindungsgemäßen Ausbildung steht somit dem Kraftfahrzeughersteller eine Ausführungsform zur Verfügung, die entweder mittels der Handhebelschaltung manuell oder mittels der Stellantriebe automatisch betätigt werden kann. Da sowohl für die automatisierte als auch für die handbetätigte Schaltgetriebeversion nur eine einzige Schaltgetriebeausbildung erforderlich ist, wird auch die Ersatzteillagerhaltung erheblich vereinfacht und verbilligt. Auch bei der automatisierten Ausbildung wird das Zahnradschaltgetriebe eingesetzt, das im Vergleich zu den herkömmlichen Automatikgetrieben mit Wandlern einen wesentlich höheren Wirkungsgrad aufweist.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in einem Längsschnitt einen erfindungsgemäßen Stellantrieb,
- Fig. 2 bis Fig. 4: in Darstellungen entsprechend Fig. 1 weitere Ausführungsformen von erfindungsgemäßen Stellantrieben,
- Fig. 5: in einem Schnitt eine weitere Ausführungsform eines erfindungsgemäßen Stellantriebes,
- Fig. 6: um 180° gedreht einen Schnitt längs der Linie VI-VI in Fig. 5,
- Fig. 7 und Fig. 8: in Darstellungen entsprechend Fig. 5 zwei weitere Schaltstellungen des Stellantriebes gemäß Fig. 5,
- Fig. 9 bis Fig. 12: eine weitere Ausführungsform eines erfindungsgemäßen Stellantriebes in Darstellungen entsprechend den Fig. 5 bis 8,
- Fig. 13: eine weitere Ausführungsform eines erfindungsgemäßen Stellantriebes teilweise in Ansicht und teilweise im Schnitt,
- Fig. 14: ein Schaltgetriebe eines Kraftfahrzeuges mit einer Schaltwelle,
- Fig. 15: eine andere Ausführungsform eines Schaltgetriebes für Kraftfahrzeuge mit zwei Schaltwellen,
- Fig. 16 und Fig. 17: jeweils in schematischen Darstellungen weitere Schaltgetriebe mit zwei Schaltwellen, die mit Stellantrieben gekuppelt sind,
- Fig. 18 bis Fig. 20: in schematischen Darstellungen weitere Ausführungsformen von Schaltgetrieben, an die Stellantriebe gekuppelt sind,
- Fig. 21 bis Fig. 24: jeweils teilweise im Schnitt und teilweise in Ansicht verschiedene Kupplungsmöglichkeiten zwischen der Schaltwelle und dem Stellantrieb,
- Fig. 25: in schematischer Darstellung die Verstellung einer Schaltwelle eines Schaltgetriebes mit zwei Stellantrieben.

Die im folgenden beschriebenen Stellantriebe dienen dazu, bei Schaltgetrieben von Kraftfahrzeugen die Schaltwelle zu verstellen.

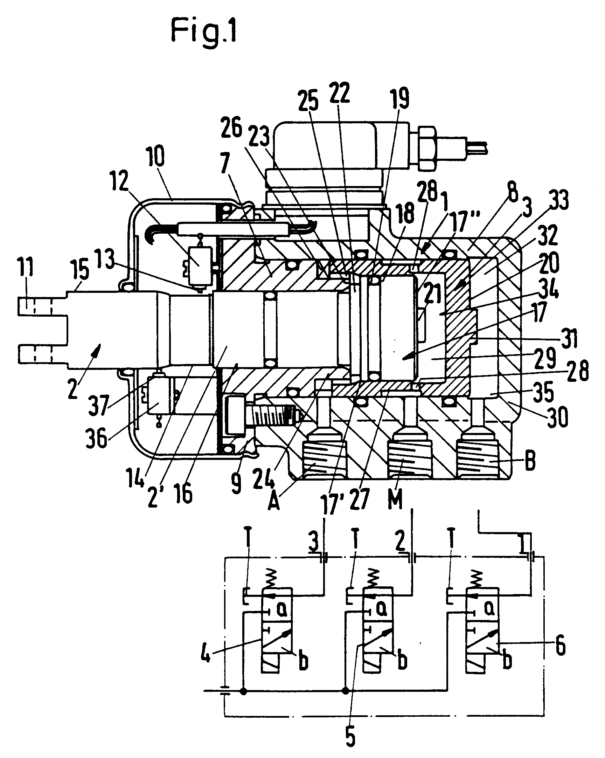

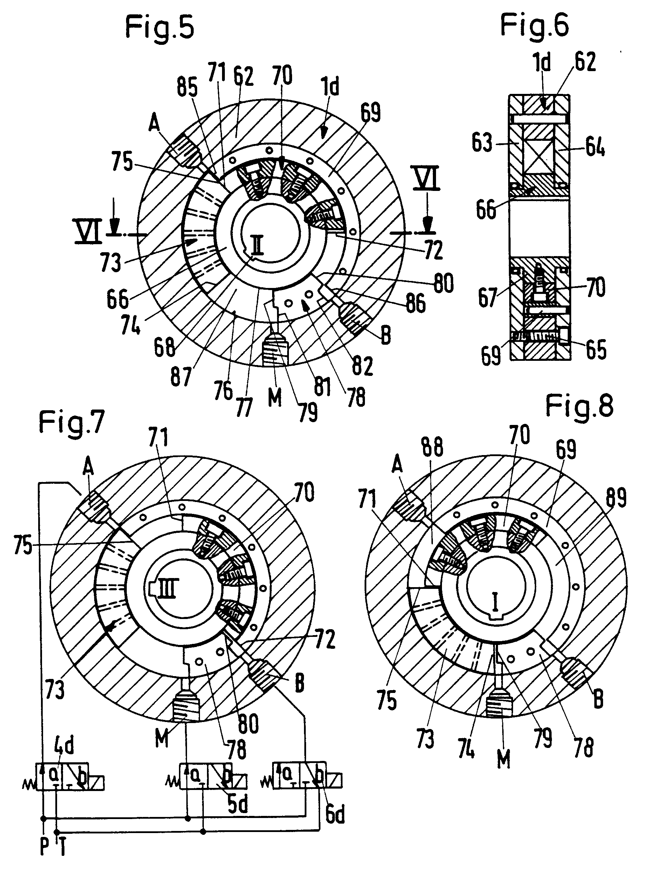

Die in den Fig. 1 bis 4 dargestellten Stellantriebe sind Linearantriebe, bei denen eine Kolbenstange axial verschoben wird, um die Schaltwelle des Schaltgetriebes zu verstellen. Die Fig. 5 bis 13 zeigen rotatorisch arbeitende Stellantriebe, um die Schaltwelle zu verstellen.

Der Stellantrieb gemäß Fig. 1 hat ein Gehäuse 1, in dem ein Hauptkolben 2 und ein Hilfskolben 3 axial verschiebbar untergebracht sind. Das Gehäuse 1 hat drei Anschlüsse A, M und B, an die jeweils ein Wegeventil 4 bis 6 angeschlossen ist.

Das Gehäuse 1 besteht vorteilhaft aus zwei lösbar miteinander verbundenen Gehäuseteilen 7 und 8. Der Gehäuseteil 7 hat einen radial nach außen ragenden Flansch 9, mit dem er an der Stirnseite des napfförmig ausgebildeten Gehäuseteiles 8 anliegt. Der Gehäuseteil 7 ragt in den Gehäuseteil 8 und liegt an dessen Innenseite abgedichtet an. Innerhalb des zylindrischen Gehäuseteiles 7 ist der Hauptkolben 2 geführt, der durch einen Deckel 10, der an der äußeren Mantelfläche des Gehäuseteilflansches 9 befestigt ist, nach außen ragt. Das aus dem Gehäuse 1 ragende Ende 11 des Hauptkolbens 2 hat zwei mit Abstand voneinander liegende Anlenklaschen. Im Bereich zwischen dem Deckel 10 und dem Gehäuseteil 7 ist ein Schalter bzw. ein Sensor 12 untergebracht, der einen Taststift 13 aufweist, der am Hauptkolben 2 anliegt. Nimmt er die in Fig. 1 dargestellte linke Endstellung (Stellung I) ein, dann liegt der Taststift 13 am Boden einer Ringnut 14 des Hauptkolbens 2 an. Wird der Hauptkolben 2 aus dieser linken Endstellung nach rechts verschoben, dann gelangt der Taststift 13 auf die Mantelfläche 15 des Hauptkolbens 2 und wird dadurch verschoben. Über den Schalter 12 wird dann ein entsprechendes Signal an eine (nicht dargestellte) elektronische Überwachungseinrichtung weitergegeben. Umgekehrt gibt der Schalter 12 kein Signal ab, wenn sich der Hauptkolben 2 in der in Fig. 1 dargestellten linken Endstellung befindet, in der der Taststift 13 aus dem Schalter 12 ausgefahren ist. Der Schalter 12 mit dem Taststift 13 bildet einen Teil eines Stellungskontrollsystems für den Hauptkolben, das noch zwei weitere, den Stellungen II und III des Hauptkolbens 2 zugeordnete Schalter mit Taststift aufweist. In Fig. 1 ist von diesen weiteren Schaltern der Schalter 36 mit Taststift 37 dargestellt. In der in Fig. 1 dargestellten linken Endstellung des Hauptkolbens 2 (Stellung I) liegt der Taststift 37 unmittelbar am Übergang von der Mantelfläche 15 in die Ringnut 14 an. Mit den drei Schaltern lassen sich die drei Stellungen I bis III des Hauptkolbens 2 einwandfrei kontrollieren.

Der Hauptkolben 2 ist an der Innenwandung 16 des Gehäuseteiles 7 geführt und weist an seinem innerhalb des Gehäuses 1 liegenden Ende einen Kolbensteg 17 auf, der größeren Durchmesser als die Kolbenstange 2' hat und an der Innenwandung des Hilfskolbens 3 anliegt. Der Kolbensteg 17 ist mit einer Ringnut 18 zur Aufnahme eines Dichtungsringes 19 versehen, durch den der Kolbensteg 17 abgedichtet an der Innenwandung des Hilfskolbens 3 anliegt. Auf der dem Boden 20 des Hilfskolbens 3 zugewandten Stirnseite weist der Kolbensteg 17 eine zentrische, im Querschnitt kreisförmige Erhöhung 21 auf, die eine ebene Stirnseite hat und wesentlich kleineren Durchmesser aufweist als der Kolbensteg 17.

An der gegenüberliegenden Seite schließt an den Kolbensteg 17 ein im Durchmesser kleineres, im Querschnitt ringförmiges Zwischenstück 22 an, das seinerseits größeren Durchmesser als die Kolbenstange 2' hat.

In der in Fig. 1 dargestellten linken Endstellung liegt das Zwischenstück 22 an der im Gehäuseteil 8 liegenden Stirnseite 23 des Gehäuseteiles 7 an. Durch diese Anschlagstellung ist die linke Endstellung I des Hauptkolbens 2 bestimmt.

Die Stirnseite 23 des Gehäuseteiles 7 ist an einem im Außendurchmesser verringerten Endteil 24 des Gehäuseteiles 7 vorgesehen. Der Außendurchmesser dieses Endteiles 24 ist kleiner als der Innendurchmesser des Hilfskolbens 3, so daß zwischen beiden Bauteilen ein Ringspalt 25 gebildet wird, durch den in noch zu beschreibender Weise Hydraulikmedium vom Anschluß A zum Kolbensteg 17 strömen kann.

Der Endteil 24 ist von einem Auflagering 26 umgeben, an dem der Hilfskolben 3 mit seiner innerhalb des Gehäuses 1 liegenden Stirnseite in seiner linken Endlage zur Anlage kommt.

Der Hilfskolben 3 ist außenseitig mit einer Ringnut 27 versehen, die ständig in Verbindung mit dem Anschluß M steht. In die Ringnut 27 münden über den Umfang des Hilfskolbens 3 verteilt angeordnete Öffnungen 28, welche die Ringnut 27 mit einem Druckraum 29 zwischen dem Kolbensteg 17 des Hauptkolbens 2 und dem Boden 20 des Hilfskolbens 3 verbinden.

Bei der in Fig. 1 dargestellten linken Endlage des Hilfskolbens 3 wird zwischen seinem Boden 20 und einem Boden 30 des Gehäuseteiles 8 ein weiterer Druckraum 32 gebildet, der in der dargestellten Lage des Hauptkolbens und des Hilfskolbens mit dem Anschluß B verbunden ist.

Die dem Gehäuseboden 30 zugewandte Stirnseite des Bodens 20 des Hilfskolbens 3 weist ebenfalls eine zentrisch angeordnete, im Querschnitt kreisförmige Erhöhung 31 auf, die eine ebene Stirnseite hat.

Mit Hilfe des Hilfskolbens 3 ist es möglich, den Hauptkolben 2 in insgesamt drei Stellungen I, II, III zu verstellen. In einer Zwischenstellung II des Hauptkolbens 2 dient der Hilfskolben 3 als Anschlag.

Ausgehend von der in Fig. 1 dargestellten Ausgangslage I, in der sich der Hauptkolben 2 und der Hilfskolben 3 jeweils in ihrer linken Endstellung befinden, wird das Ventil 4 geöffnet (Schaltstellung b), so daß das Hydraulikmedium über den Anschluß A und den Ringspalt 25 zum Kolbensteg 17 strömen kann. Gleichzeitig wird der Druckraum 29 entlastet, indem das Wegeventil 5 auf Schaltstellung a geschaltet wird. Das Wegeventil 6 wird in Stellung b geschaltet, so daß der Druckraum 32 mit Druck beaufschlagt wird. Da die dem Gehäuseboden 30 zugewandte Stirnseite 33 größere Fläche hat als die innere Stirnseite 34 des Hilfskolbenbodens 20, wird der Hilfskolben 3 durch den im Druckraum 32 herrschenden Druck in seiner linken Anschlagstellung gehalten, in der er am Auflagering 26 anliegt. Der Hauptkolben 2 wird durch die Druckbeaufschlagung über den Anschluß A in Fig. 1 nach rechts verschoben, bis die Erhöhung 21 an der Stirnseite 34 des Hilfskolbenbodens 20 zur Anlage kommt. Da der Druckraum 29 entlastet ist, kann der Hauptkolben 2 bis in diese Zwischenstellung verschoben werden, in der der Hilfskolben 3 als Anschlag für den Hauptkolben 2 dient. Damit wird die Stellung II erreicht.

Soll nun aus dieser Stellung II in die Stellung III verfahren werden, dann wird das Wegeventil 6 so geschaltet, daß eine Verbindung zum Tank T besteht (Schaltstellung a). Die beiden anderen Wegeventile 4 und 5 bleiben in ihrer jeweiligen Schaltstellung. Nunmehr kann der Hauptkolben 2 infolge des auf die Ringfläche 17' des Kolbensteges 17 wirkenden Druck zusammen mit dem Hilfskolben 3 so weit verschoben werden, bis die Erhöhung 31 des Hilfskolbens 3 am Gehäuseboden 30 anliegt. Nunmehr ist die dritte Stellung III erreicht.

Es ist auch möglich, den Hauptkolben 2 unmittelbar aus der in Fig. 1 dargestellten Stellung I in die beschriebene Stellung III zu schalten. In diesem Falle werden die beiden Wegeventile 5 und 6 jeweils so geschaltet, daß sie jeweils eine Verbindung zum Tank T herstellen (Schaltstellung a). Dann kann das über den Anschluß A zugeführte Hydraulikmedium den Hauptkolben 2 und den Hilfskolben 3 in einem Zuge in die Stellung III verschieben, in der der Hilfskolben 3 mit seiner Erhöhung 31 am Gehäuseboden 30 und der Hauptkolben 2 mit seiner Erhöhung 21 am Hilfskolbenboden 20 anliegen.

Sollen beide Kolben 2 und 3 aus der Stellung III wieder zurückgeschoben werden, dann wird das Wegeventil 6 in die Schaltstellung b verstellt, während das Wegeventil 5 so geschaltet wird, daß eine Verbindung zum Tank T besteht (Schaltstellung a). Das Wegeventil 4 wird auf Druck geschaltet (Schaltstellung b). Da die beaufschlagte Kolbenfläche 17' des Kolbensteges 17 wesentlich kleiner ist als die Kolbenfläche 34 des Hilfskolbens 3, werden nunmehr der Hilfskolben 3 und der Hauptkolben 2 gemeinsam verschoben. Sobald der Hilfskolben 3 am Auflagering 26 anschlägt, ist die Stellung II erreicht. Der Hauptkolben 2 bleibt, wenn über den Anschluß A die Ringfläche 17' des Kolbensteges 17 mit Druck beaufschlagt ist, in dieser Stellung II stehen, da der Druckraum 29 drucklos ist.

Soll der Hauptkolben 2 weiter in die in Fig. 1 dargestellte Stellung I verstellt werden, dann wird das Wegeventil 5 auf Druck geschaltet (Schaltstellung b), so daß über den Anschluß M der Druckraum 29 und damit die Kolbenstegfläche 17'' mit Druck beaufschlagt wird. Das Wegeventil 6 bleibt weiterhin auf Druck geschaltet (Schaltstellung b), so daß bei der Druckbeaufschlagung der Kolbenstegfläche 17'' vom Druckraum 29 aus der Hilfskolben 3 in seiner in Fig. 1 dargestellten Anschlagstellung bleibt. Das Wegeventil 4 wird so geschaltet, daß die Verbindung zum Tank T hergestellt ist (Schaltstellung a). Durch den Druck im Druckraum 29 wird darum der Hauptkolben 2 bis in seine Stellung I verstellt, in der er mit dem Zwischenstück 22 am Gehäuseteil 7 anschlägt.

Damit in der rechten Endstellung des Hilfskolbens 3 der Druckraum 32 mit Druck beaufschlagt werden kann, ist die Innenwandung des Gehäuseteiles 8 im Bereich des Anschlusses B mit einer Ringnut 35 versehen, über die das Hydraulikmedium in den Druckraum 32 gelangen kann, wenn der Hilfskolben 3 seine rechte Anschlagstellung einnimmt. Die beiden Erhöhungen 21 und 31 des Hauptkolbens 2 und des Hilfskolbens 3 stellen sicher, daß die jeweiligen Kolbenflächen auch in den Anschlagstellungen noch mit Druck beaufschlagt werden können.

Die Durchmesser der Kolbenstange 2', des Kolbensteges 17 sowie der Stirnseite 33 des Hilfskolbenbodens 20 sind so gewählt, daß sich ein Flächenverhältnis von beispielsweise etwa 1:2:3 ergibt. Aufgrund dieser Flächenverhältnisse ergeben sich je nach den Verschiebewegen stark unterschiedliche zu- und abgeführte Volumenströme, die innerhalb der gewünschten Stellzeiten einwandfrei zu- und abgeführt werden. Diese Ausführungsform zeichnet sich durch eine kompakte Ausbildung und durch eine geringe Zahl an Bauteilen aus.

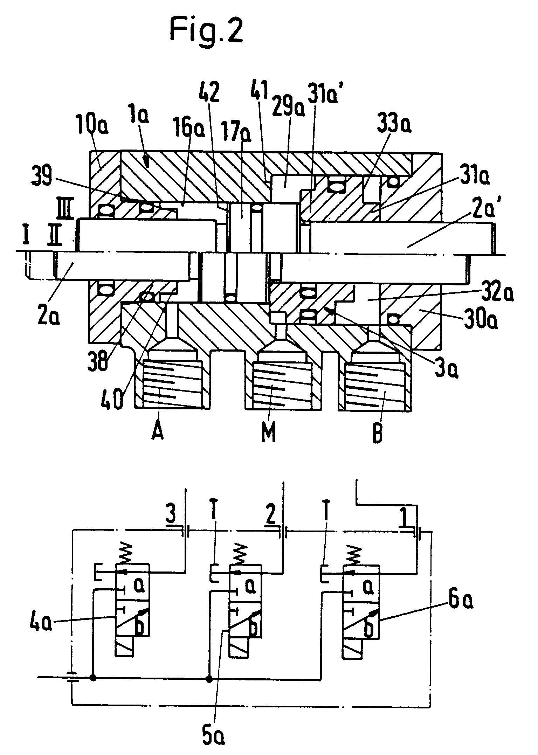

Die Ausführungsform gemäß Fig. 2 arbeitet grundsätzlich gleich wie das zuvor beschriebene Ausführungsbeispiel. In der unteren Hälfte sind der Hauptkolben 2a und der Hilfskolben 3a mit ausgezogenen Linien in der Zwischenstellung II dargestellt, während die obere Hälfte die Stellung III zeigt. In der unteren Hälfte ist mit strichpunktierten Linien noch die Stellung I für den Hauptkolben 2a dargestellt. Der Hauptkolben 2a hat wiederum den Kolbensteg 17a, der an der Innenwandung 16a des Gehäuses 1a geführt ist. Der Kolbensteg 17a hat größeren Durchmesser als die Kolbenstange 2a', die abgedichtet durch den Deckel 10a nach außen ragt. Der Deckel 10a hat einen im Gehäuse 1a liegenden buchsenförmigen Teil 38, an dessen Stirnfläche 39 der Kolbensteg 17a in der linken Stellung I des Hauptkolbens 2a anliegt. Die Stirnfläche 39 ist an einem im Außendurchmesser verringerten Endteil 40 vorgesehen, dessen äußere Mantelfläche somit Abstand von der Innenwandung 16a des Gehäuses 1a hat. In diesem Bereich mündet der Anschluß A, an den das Wegeventil 4a angeschlossen ist.

Der Kolbensteg 17a ist im Gegensatz zum vorigen Ausführungsbeispiel nicht am Ende des Hauptkolbens 2a vorgesehen, sondern etwa in dessen halber Länge. Der Hilfskolben 3a sitzt somit auf der Kolbenstange 2a'. Er ist in einem im Innendurchmesser größeren Bereich des Gehäuses 1a geführt und weist auf beiden Stirnseiten jeweils eine ringförmige Erhöhung 31a, 31a' auf, die jeweils von der Kolbenstange 2a' durchsetzt wird.

Zwischen dem Hilfskolben 3a und dem Gehäuseboden 30a wird der Druckraum 32a gebildet, in den der Anschluß B mündet, der mit dem Wegeventil 6a verbunden ist. In den Druckraum 29a mündet der Anschluß M, der mit dem Wegeventil 5a verbunden ist. Der Druckraum 29a wird axial vom Hilfskolben 3a sowie von einer radial nach innen ragenden ringförmigen Schulterfläche 41 und radial vom Gehäuse 1a sowie dem Hauptkolben 2a bzw. dessen Kolbensteg 17a begrenzt.

In der linken Endstellung des Hauptkolbens 2a und des Hilfskolbens 3a (Stellung I) liegt der Kolbensteg 17a an der Stirnseite 39 des Buchsenteiles 38 des Deckels 10a an, während der Hilfskolben 3a an der Schulterfläche 41 des Gehäuses 1a anliegt.

Soll nun die Stellung II erreicht werden, dann wird über den Anschluß A und das Wegeventil 4a (Schaltstellung b) der Druck vor dem Kolbensteg 17a aufgebaut. Der Druckraum 32a wird über den Anschluß B und das Wegeventil 6a (Schaltstellung b) ebenfalls unter Druck gesetzt. Da die dem Druckraum 32a zugewandte Kolbenfläche 33a des Hilfskolbens 3a größer ist als die vom Hydraulikmedium beaufschlagte Ringfläche 42 des Kolbenstegs 17a, wird beim Verschieben des Hauptkolbens 2a aus der Stellung I (strichpunktierte Linie) in die Stellung II (untere Darstellung in Fig. 2) der Hilfskolben 3a durch den im Druckraum 32a herrschenden Druck in seiner linken Endstellung gehalten. Der Hauptkolben 2a wird darum so weit verschoben, bis er am Hilfskolben 3a zur Anlage kommt. Auch bei dieser Ausführungsform dient somit der Hilfskolben 3a als Anschlag für den Hauptkolben 2a in dessen Stellung II.

Soll der Hauptkolben 2a in die Stellung III (obere Hälfte in Fig. 2) verschoben werden, dann wird das Wegeventil 6a so geschaltet, daß eine Verbindung zum Tank T hergestellt wird (Schaltstellung a). Dadurch kann der Hauptkolben 2a beim weiteren Verschieben den Hilfskolben 3a mitnehmen, bis die Erhöhung 31a des Hilfskolbens 3a am Boden 30a zur Anlage kommt.

Der Hauptkolben 2a kann auch in einem Zug aus der Stellung I in die Stellung III verstellt werden. In diesem Fall werden die beiden Wegeventile 5a und 6a jeweils so geschaltet, daß eine Verbindung zum Tank T besteht (Schaltstellung a). Über den Anschluß A wird das Hydraulikmedium unter Druck in den Raum vor dem Kolbensteg 17a eingebracht, so daß der Hauptkolben 2a nach rechts verschoben wird. Der Hauptkolben 2a wird dann in einem Zug bis in die Stellung III verschoben, wobei er wiederum den Hilfskolben 3a mitnimmt, bis er am Boden 30a anschlägt.

Durch entsprechende Schaltung der Wegeventile 4a bis 6a werden der Hauptkolben 2a und/oder der Hilfskolben 3a wieder in ihre jeweiligen linken Endstellungen zurückgeschoben. Befinden sich der Hauptkolben 2a und der Hilfskolben 3a in der rechten Endstellung (Stellung III), dann wird, um die Stellung II zu erreichen, der Druckraum 32a durch Umschaltung des Wegeventiles 6a unter Druck gesetzt (Schaltstellung b), während die beiden Wegeventile 4a und 5a so geschaltet werden, daß eine Verbindung zum Tank T besteht (Schaltstellung a). Dann lassen sich der Hauptkolben 2a und der Hilfskolben 3a durch den in den Druckraum 32a fließenden Druckmittelstrom verschieben. Sobald der Hilfskolben 3a am gehäuseseitigen Anschlag 41 zur Anlage kommt, ist die Stellung II erreicht. Um den Hauptkolben 2a weiter in die Stellung I zu verschieben, wird nunmehr im Druckraum 29a durch entsprechende Umschaltung des Wegeventiles 5a (Schaltstellung b) der Druck aufgebaut. Das Wegeventil 6a bleibt in seiner Schaltstellung b, so daß weiterhin im Druckraum 32a Druck aufgebaut wird. Unter dem im Druckraum 29a herrschenden Druckmittelstrom wird somit der Hauptkolben 2a in die Stellung I verschoben, während der Hilfskolben 3a infolge des Druckes im Druckraum 32a in seiner Anschlagstellung bleibt.

Bei dieser Ausführungsform beträgt das Flächenverhältnis der beaufschlagten Flächen etwa 1:2. Darum ergeben sich je nach Verschiebewegen unterschiedliche zu- und abgeführte Volumenströme, deren Unterschied geringer ist als bei der Ausführungsform gemäß Fig. 1. Der Stellantrieb ist so ausgebildet, daß die Ölmengen innerhalb der gewünschten Stellzeiten einwandfrei zu- und abgeführt werden. Diese Ausführungsform zeichnet sich wiederum dadurch aus, daß sie ein geringes Bauvolumen hat und nur aus wenigen Bauteilen besteht.

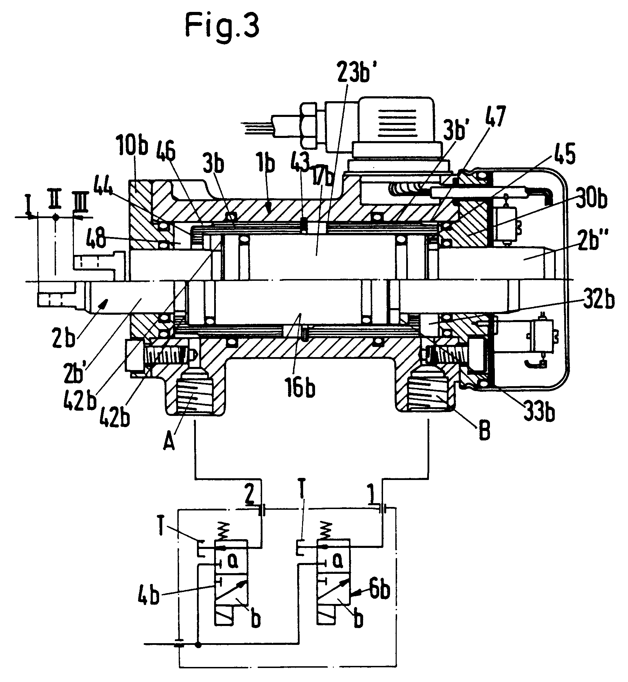

Beim Ausführungsbeispiel nach Fig. 3 werden im Unterschied zu den Ausführungsformen nach den Fig. 1 und 2 nur zwei Wegeventile 4b und 6b benötigt. Im Gehäuse 1b sind zwei spiegelbildlich zueinander angeordnete, jeweils hülsenförmig ausgebildete Hilfskolben 3b und 3b' untergebracht, die den Kolbensteg 17b des Hauptkolbens 2b umfassen. Außerdem liegen die beiden Hilfskolben 3b, 3b' an der Innenwandung 16b des Gehäuses 1b an. Der Kolbensteg 17b sitzt mittig auf dem Hauptkolben 2b, dessen beide Kolbenstangen 2b', 2b'' mit beiden Enden axial aus dem Gehäuse 1b ragen.

Den beiden Hilfskolben 3b, 3b' ist ein gemeinsamer gehäusefester Anschlag 43 zugeordnet, der im Ausführungsbeispiel ein Sprengring ist, der in die Innenwandung 16b des Gehäuses 1b eingesetzt ist.

Die beiden Hilfskolben 3b, 3b' sind an ihren voneinander abgewandten Enden jeweils mit einem radial nach innen gerichteten Flansch 44 und 45 versehen, mit dem sie in der jeweiligen Endstellung I bzw. III am Gehäusedeckel 10b bzw. am Boden 30b anliegen. In Fig. 3 ist in der unteren Hälfte die Stellung I und in der oberen Hälfte die Stellung III dargestellt.

In der Stellung I liegt der Hilfskolben 3b mit seinem Flansch 44 am Gehäusedeckel 10b an. Der Kolbensteg 17b des Hauptkolbens 2b liegt am Flansch 44 an. Der andere Hilfskolben 3b' liegt mit seiner dem Hilfskolben 3b zugewandten Stirnseite 23b' am gehäusefesten Anschlag 43 an. Der Flansch 45 des Hilfskolbens 3b' hat in dieser Lage Abstand vom Kolbensteg 17b. Die beiden Hilfskolben 3b, 3b' haben nahe ihren die Flansche 44, 45 aufweisenden Enden einen verringerten Außendurchmesser, so daß in der jeweiligen Endlage des Hilfskolbens ein Ringraum 46, 47 zwischen dem Hilfskolben und der Gehäusewandung gebildet wird, in den vom jeweiligen Anschluß A bzw. B Hydraulikmedium zur Beaufschlagung eintreten kann.

In der Stellung III (obere Hälfte in Fig. 3) liegt der Flansch 45 des Hilfskolbens 3b' am Boden 30b an. Der Hauptkolben 2b liegt mit der dem Flansch 45 zugewandten Ringfläche 33b seines Kolbensteges 17b am Flansch 45 an. Der andere Hilfskolben 3b liegt am gehäuseseitigen Anschlag 43 an. Die benachbarte Ringfläche 42b des Kolbensteges 17b liegt mit axialem Abstand dem Flansch 44 des Hilfskolbens 3b gegenüber. Um den Hauptkolben 2b aus der Stellung III in die Stellung II zu verschieben, wird das Wegeventil 6b so geschaltet (Schaltstellung b), daß im Druckraum 32b zwischen dem Boden 30b und der Kolbenringfläche 33b Druckmittel einströmen kann. Damit das Hydraulikmedium vom Ringraum 47 an die Kolbenringfläche 33b des Kolbensteges 17b gelangen kann, ist der Hilfskolben 3b' mit (nicht dargestellten) Durchlässen für das Hydraulikmedium versehen. Der Hilfskolben 3b' und der Hauptkolben 2b werden somit aus der Stellung III in die Stellung II verschoben. Je nach Toleranz schlägt entweder der Hilfskolben 3b' mit seiner Stirnseite 23b' am gehäuseseitigen Anschlag 43 oder der Kolbensteg 17b des Hauptkolbens 2b mit seiner Ringfläche 42b am Flansch 44 des Hilfskolbens 3b an. Das Wegeventil 4b ist so geschaltet (Schaltstellung b), daß der Druckraum 48 am anderen Ende des Gehäuses 1b unter Druck steht. Dadurch bleibt der Hilfskolben 3b in seiner in der oberen Hälfte dargestellten Ahschlagstellung. Dieser Hilfskolben 3b bzw. der gehäuseseitige Anschlag 43 bestimmen somit die Lage des Hauptkolbens 2b in der Stellung II.

Soll die Stellung I erreicht werden, dann wird das Wegeventil 4b so geschaltet (Schaltstellung a), daß eine Verbindung zum Tank T besteht. Das Wegeventil 6b bleibt weiterhin in seiner Druckstellung (Schaltstellung b). Dadurch wird nunmehr der Hauptkolben 2b zusammen mit dem Hilfskolben 3b bis in die in der unteren Hälfte der Fig. 3 dargestellte Stellung I verschoben. Der Hilfskolben 3b liegt dann mit seinem Flansch 44 am Deckel 10b an, während die Ringfläche 42b des Kolbensteges 17b am Flansch 44 zur Anlage kommt.

Auch bei dieser Ausführungsform ist es möglich, den Hauptkolben 2b in einem Zug aus der Stellung III in die Stellung I zu verstellen. In diesem Falle wird das Wegeventil 4b so geschaltet, daß die Verbindung zum Tank T besteht (Schaltstellung a). Dann wird der Hauptkolben 2b zusammen mit dem Hilfskolben 3b' verschoben, bis der Hilfskolben 3b' am gehäuseseitigen Anschlag 43 zur Anlage kommt. Beim weiteren Verschieben des Hauptkolbens 2b wird der Hilfskolben 3b in der beschriebenen Weise bis in seine Endstellung mitgenommen.

Soll der Hauptkolben 2b wieder zurück in die Stellung II oder die Stellung III verschoben werden, werden die beiden Wegeventile 4b und 6b entsprechend umgekehrt geschaltet. Der Bewegungsablauf ist hierbei der gleiche, jedoch in entgegengesetzter Richtung.

Diese Ausführungsform zeichnet sich vorteilhaft dadurch aus, daß die zu- und abgeführten Volumenströme des Hydraulikmediums beiderseits des Kolbensteges 17b nur im Verhältnis von etwa 1:2 differieren. Dadurch ist nur ein mittlerer Ölbedarf erforderlich.

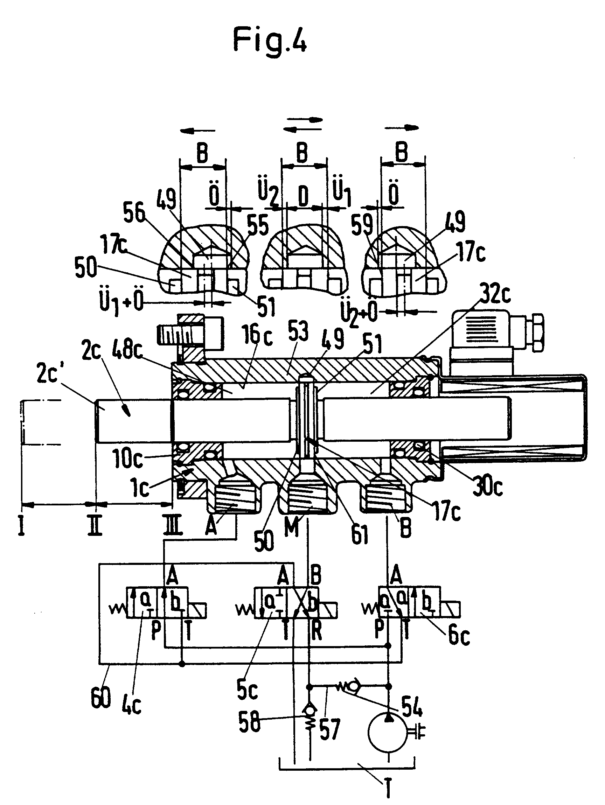

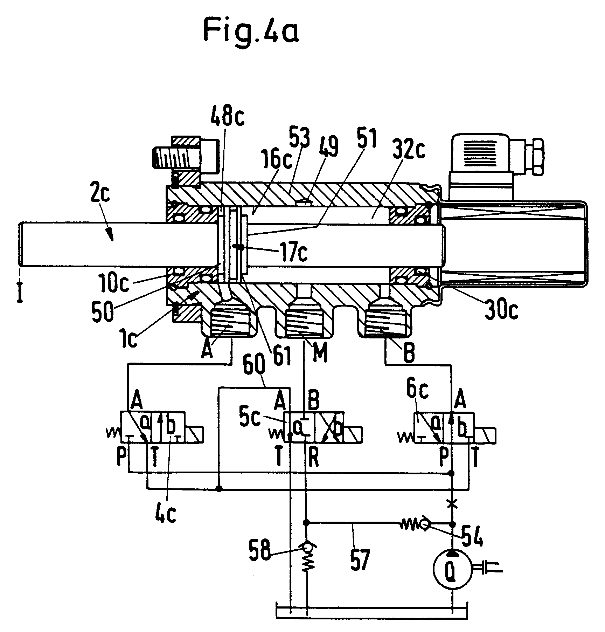

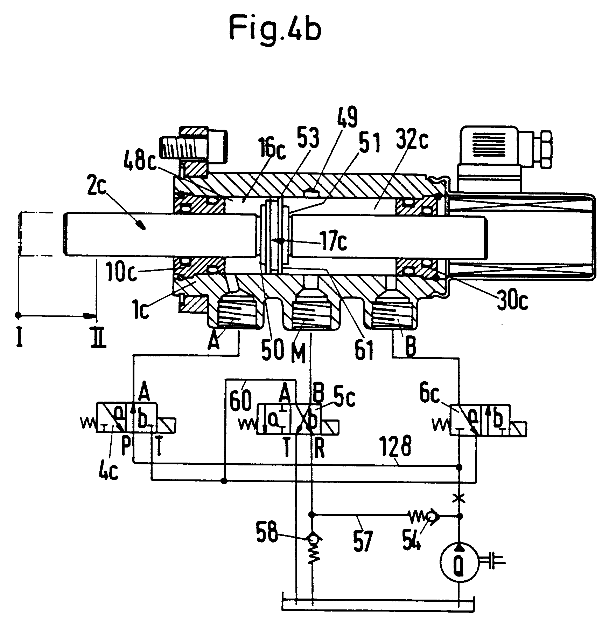

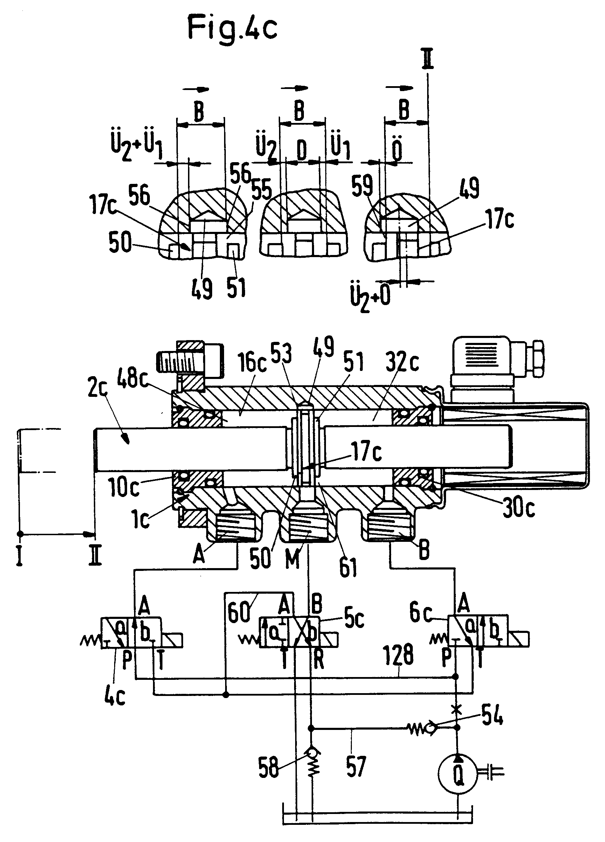

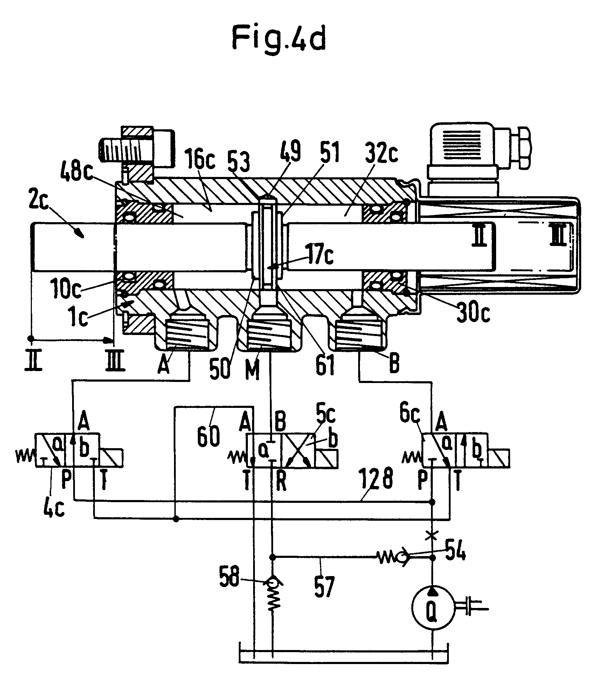

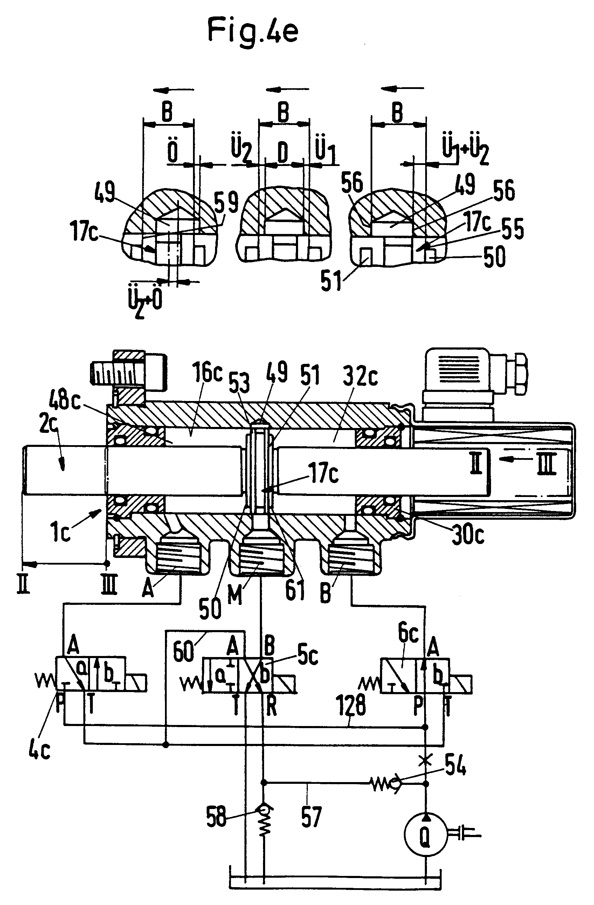

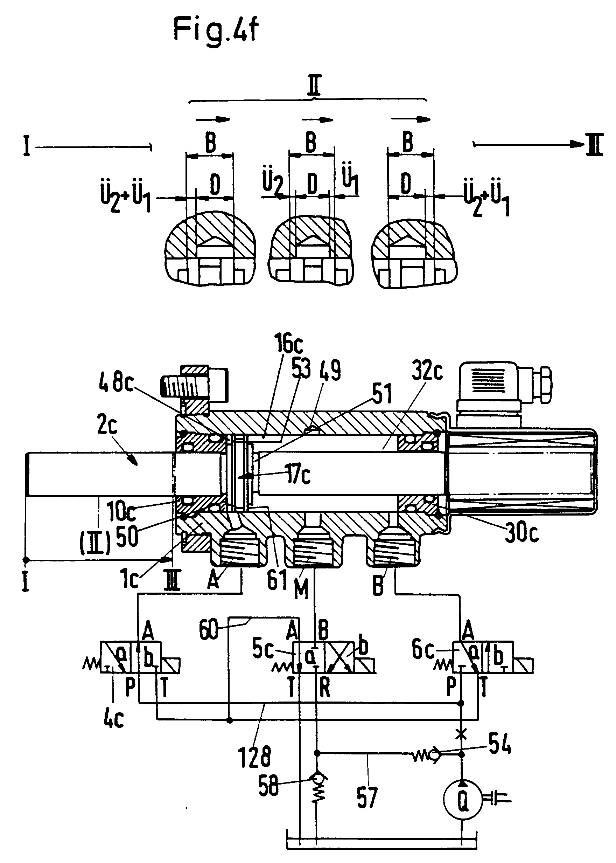

Beim Ausführungsbeispiel gemäß Fig. 4 wird ohne Hilfskolben gearbeitet. Dessen Funktion wird vom Kolbensteg 17c übernommen, der mit einem Steuerquerschnitt 49 im Gehäuse 10 zusammenwirkt. Der Kolbensteg 17c hat eine Breite B, die größer ist als die Querschnittsbreite D des Steuerquerschnitts 49. Im dargestellten Ausführungsbeispiel ist der Steuerquerschnitt 49 eine Bohrung in der Innenwandung 16c des Gehäuses 1c. In Fig. 4 sind in noch zu beschreibender Weise die Stellungen des Kolbensteges 17c in der mittleren Stellung II vergrößert dargestellt. Der Kolbensteg 17c weist an beiden Stirnseiten jeweils einen Bund 50 und 51 auf, der kleineren Außendurchmesser als der Kolbensteg 17c hat.

Da die Breite B des Kolbensteges 17 größer ist als der Durchmesser D der Steuerbohrung 49, wird sie durch den Kolbensteg 17c mit Überdeckung abgedeckt, wenn der Kolbensteg 17c genau mittig zur Steuerbohrung 49 liegt. In diesem Falle besteht eine Überdeckung Ü₁, Ü_{2,} die beispielsweise in der Größenordnung von 0,1 mm liegen kann.

In der Ausgangslage (Stellung I) des Hauptkolbens 2c liegt der Kolbensteg 17c mit seinem Bund 50 am Deckel 10c an, durch den die Kolbenstange 2c' des Hauptkolbens abgedichtet nach außen ragt (Fig. 4a). Das Wegeventil 4c befindet sich in federbetätigter Schaltstellung a, ebenso wie das Wegeventil 5c. Der Anschluß A des Gehäuses 1c wird dadurch mit dem Tank verbunden und drucklos geschaltet. Das Wegeventil 6c befindet sich in magnetbetätigter Schaltstellung b. Der Anschluß B des Gehäuses 1c wird dadurch mit der Druckmittelquelle Q verbunden.

Das unter Druck stehende Hydraulikmedium beaufschlagt die Ringfläche 61 des Kolbensteges 17c, der dadurch am Deckel 10c anliegt.

Der Anschluß M des Gehäuses 1c ist mit dem Anschluß B des Wegeventiles 5c verbunden, der in der federbelasteten Schaltstellung a in Sperrstellung steht und verhindert, daß unter Druck stehendes Hydraulikmedium aus dem zylindrischen Druckraum 32c abströmen kann.

Das von der Druckmittelquelle Q geförderte Hydraulikmedium strömt über ein Druckbegrenzungsventil 54 und ein Widerstands- bzw. Vorspannventil 58 zum Tank T. Dadurch baut sich im Druckraum 32c ein Druck auf, der dem Einstelldruck des Druckbegrenzungsventils 54 entspricht, der beispielsweise 30 bar beträgt. Vor dem Widerstandsventil 58 baut sich ebenfalls ein Druck auf, der dem Einstelldruck, beispielsweise 5 bar, entspricht.

Von der Druckmittelquelle Q wird das Hydraulikmedium über eine den Volumenstrom begrenzende Drossel Dr über das in Schaltstellung b befindliche Wegeventil 6c zum Anschluß B und von dort in den Druckraum 32c gefördert. Das Wegeventil 5c ist in Schaltstellung a geschaltet, so daß das im Druckraum 32c befindliche Hydraulikmedium nicht über den Anschluß M und das Wegeventil 5c zum Tank T abfließen kann. Der Kolbensteg 17c wird dadurch auf seiner rechten Seite mit dem Hydraulikmedium beaufschlagt und der Hauptkolben 2c damit in seiner in Fig. 4a dargestellten Stellung I gehalten. In dieser Stellung I tritt kein Ölmittelverbrauch auf, so daß das von der Druckmittelquelle Q geförderte Hydraulikmedium über das Druckbegrenzungsventil 54 und das Widerstandsventil 58 zum Tank T abfließen kann.

Das in Schaltstellung a befindliche Wegeventil 4c entlastet den Anschluß A des Gehäuses 1c, so daß über den Anschluß A des Wegeventils 4c eine Verbindung zum Anschluß T dieses Wegeventiles geöffnet wird. Das Hydraulikmedium kann darum vom Anschluß T des Wegeventils 4c über die Leitung 60 zum Anschluß A des Wegeventiles 5c und von dort über den Anschluß T dieses Wegeventiles zum Tank T strömen.

Zum Verfahren des Hauptkolbens 2c aus der Stellung I in die Stellung II (Fig. 4b) wird über den Anschluß A und das Wegeventil 4c in Schaltstellung b das Hydraulikmedium infolge des im Außendurchmesser kleineren Bundes 50 in den Bereich zwischen dem Deckel 10c und dem Kolbensteg 17c in das Gehäuse 1c eingebracht. Das unter Druck stehende Hydraulikmedium beaufschlagt die Ringfläche 53 des Kolbensteges 17c, die durch den über den Bund 50 überstehenden Stirnseitenteil des Kolbensteges gebildet wird. Die beiden Wegeventile 5c und 6c, die an die Anschlüsse M und B des Gehäuses 1c angeschlossen sind, sind so geschaltet, daß eine Verbindung zum Tank T besteht (Wegeventil 5c = Schaltstellung b, Wegeventil 6c = Schaltstellung a). Das von der Druckmittelquelle Q geförderte Hydraulikmedium strömt über eine Leitung 128 zum Anschluß P des Wegeventiles 4c und von dort über dessen Anschluß A zum Gehäuseanschluß A. Dadurch wird die Ringfläche 53 des Kolbensteges 17c beaufschlagt, wodurch der Hauptkolben 2c aus der Stellung I in Richtung auf die Stellung II im Gehäuse 1c verschoben wird. Das im Druckraum 32c befindliche Hydraulikmedium wird zunächst über den Gehäuseanschluß M und das Wegeventil 5c unmittelbar zum Tank T verdrängt. Bei diesem Verschieben des Hauptkolbens 2c wird das überschüssige Hydraulikmedium von der Druckmittelquelle Q über das Druckbegrenzungsventil 54 zum Anschluß R des Wegeventiles 5c, über dessen Anschluß A und die Leitung 60 zum Anschluß T des Wegeventiles 6c und von dort zum Gehäuseanschluß B in den Druckraum 32c gefördert. Sollte das Widerstandsventil 58 einen niedrigeren Druck haben als der Durchlaufwiderstand über die soeben beschriebene Strecke für das Hydraulikmedium, dann fließt das Hydraulikmedium über das Widerstandsventil 58 unmittelbar in den Tank T zurück.

Sobald der Kolbensteg 17c mit seiner in Fig. 4c (obere linke Darstellung) rechten Steuerkante 55 die Kante 56 der Steuerbohrung 49 überfährt und verschließt, ist der Durchgang für das Hydraulikmedium durch den Anschluß M gesperrt. Nunmehr kann es nur noch über den Anschluß B zum Wegeventil 6c verdrängt werden.

Das Hydraulikmedium strömt über den Anschluß B des Gehäuses 1c zum Anschluß A des Wegeventiles 6c und von dort über den Anschluß T und die Leitung 60 zum Anschluß A des Wegeventiles 5c. Über den Anschluß R dieses Wegeventiles 5c wird das Hydraulikmedium über das Widerstandsventil 58 zum Tank T abgeführt. Dadurch herrscht im gesamten beschriebenen Strömungsweg bis in den Druckraum 32c der Einstelldruck des Widerstandsventils 58.

Ist die Steuerbohrung 49 beim Verschieben des Hauptkolbens 2c durch den Kolbensteg 17c vollständig geschlossen (obere mittlere Darstellung in Fig. 4c), dann herrscht auf beiden Seiten des Kolbensteges 17c ein Druckverhältnis entsprechend dem Einstelldruck der beiden Ventile 54 und 58. Somit herrscht im Druckraum 48c links des Kolbensteges 17c ein Druck von etwa 30 bar und im Druckraum 32c rechts des Kolbensteges ein Druck von etwa 5 bar. Aufgrund dieses Druckunterschiedes wird der Hauptkolben 2c noch weiter nach rechts verschoben. Dadurch öffnet die linke Steuerkante 59 des Kolbensteges 17c (obere rechte Darstellung in Fig. 4c) die Steuerbohrung 49 geringfügig. Dadurch kann im Druckraum 48c der Druck abgebaut und so weit abgesenkt werden, daß der Druck in diesem Druckraum 48c dem Druck im anderen Druckraum 32c entspricht. Damit herrscht auf beiden Seiten des Kolbensteges 17c gleicher Druck, so daß der Hauptkolben 2c in einer definierten Stellung II stehen bleibt. In dieser Stellung II ist die Steuerbohrung 49 in der beschriebenen Weise teilweise geöffnet, um die beschriebene Druckgleichheit in beiden Druckräumen 48c, 32c zu erreichen.

Aus der Stellung II gemäß Fig. 4c kann der Kolben 2c weiter in die Stellung III verschoben werden (Fig. 4d), in der der Bund 51 des Kolbensteges 17c am Boden 30c des Gehäuses 1c nach erfolgtem Hub zur Anlage kommt. Um diese Verschiebung des Kolbens 2c zu ermöglichen, wird das Wegeventil 5c in die federbelastete Schaltstellung a verschoben, so daß die Verbindung vom Anschluß M zum Tank T unterbrochen ist. Das Wegeventil 4c bleibt in der magnetgeschalteten Stellung b. Das im Druckraum 32c verdrängte Ölvolumen strömt über den Anschluß B zum Wegeventil 6c (Schaltstellung), von dort über die Leitung 60 zum Wegeventil 5c und von dort drucklos zum Tank T. In der beschriebenen Anschlagstellung ist der Anschluß B des Gehäuses 1c nicht vollständig geschlossen, so daß nach Umschaltung des Ventils 6c das Druckmedium über den Anschluß B an die Ringfläche 61 des Kolbensteges 17c gelangen kann. Die Ringfläche 61 umgibt den Bund 51 des Kolbensteges 17c. Durch diese Druckmittelbeaufschlagung kann der Kolben 2c aus der Stellung III zurück in die Stellung II oder I verschoben werden. Die Ventile 4c bis 6c werden hierzu entsprechend umgeschaltet.

Wird der Kolben 2c aus der Stellung III in die Stellung II verschoben (Fig. 4e), dann befindet sich der Kolbensteg 17c in einer anderen Endposition, als wenn er aus der Stellung I in die Stellung II verschoben worden ist. Wird nämlich der Kolben 2c aus der Schaltstellung III in die Schaltstellung II verschoben, dann überfährt die linke Steuerkante 59 des Kolbensteges 17c die Steuerbohrung 49 im Gehäuse 1c. Bei dieser Verstellung des Kolbens 2c ist das Wegeventil 4c so geschaltet (Schaltstellung a), daß eine Verbindung zum Widerstandsventil 58 besteht. Beim Verschieben des Kolbens 2c wird das im Druckraum 48c befindliche Hydraulikmedium über den Anschluß A des Gehäuses 1c zum Anschluß A des Wegeventiles 4c verdrängt. Von dort strömt es über dessen Anschluß T und die Leitung 60 zum Anschluß A des Wegeventiles 5c, über dessen Anschluß R das Hydraulikmedium dann über das Widerstandsventil 58 zum Tank T fließt. Wird die Steuerbohrung 49 durch den Kolbensteg 17c vollständig verschlossen, dann herrscht auf beiden Seiten des Kolbensteges 17c wiederum ein Druckverhältnis entsprechend dem Einstelldruck der beiden Ventile 54 und 58. Nunmehr ist der höhere Druck im Druckraum 32c, wodurch der Kolbensteg 17c weiter nach links verschoben wird. Die Steuerkante 55 überfährt die Steuerbohrung 49 und öffnet sie teilweise. Dadurch kann der Druck im Druckraum 32c so weit abgebaut werden, bis der gleiche Druck wie im anderen Druckraum 48c herrscht. Dadurch bleibt der Kolben 2c in der Stellung II stehen. Diese Stellung des Kolbensteges 17c beim Zurückfahren aus der Stellung III ist in der linken oberen Darstellung in Fig. 4e vergrößert dargestellt. Die Öffnungsweite Ö ist im Vergleich zur Öffnungsbreite D der Steuerbohrung 49 verhältnismäßig klein. Ein Vergleich der oberen linken Abbildung in Fig. 4e mit der oberen rechten Abbildung in Fig. 4c zeigt, daß der Kolbensteg 17c unterschiedliche Lagen einnimmt, je nach Anfahrrichtung des Kolbens 2c. In beiden Fällen unterscheidet sich die Stellung II des Kolbens 2c um die Größe der Überdeckung Ü und des Öffnungshubes Ö von der exakten Mittelstellung des Kolbensteges 17c, die in der oberen mittleren Abbildung dargestellt ist.

Aus dieser Stellung II kann der Kolben 2c in die Stellung I verstellt werden. In diesem Falle wird das Wegeventil 4c in die Schaltstellung a und das Wegeventil 6c in die Schaltstellung b geschaltet. Das Wegeventil 5c bleibt in der Schaltstellung a. Nun kann das Hydraulikmedium aus dem Druckraum 48c über den Anschluß A des Gehäuses 1c zum Tank T verdrängt werden kann.

Der Kolben 2c läßt sich auch in einem Zug aus der Stellung I in die Stellung III verschieben bzw. umgekehrt (Fig. 4f). Bei dieser Verschiebebewegung muß der mittlere Anschluß M gesperrt werden. Hierzu wird das Wegeventil 5c in die Schaltstellung a geschaltet. Wird der Kolben 2c aus der Stellung I in die Stellung III verschoben, dann wird das Wegeventil 4c in die Schaltstellung b und das Wegeventil 6c in die Schaltstellung a geschaltet. Dadurch kann das Hydraulikmedium von der Druckmittelquelle Q über die Leitung 128 und das Wegeventil 4c in den Druckraum 48c gefördert werden. Bei Verschieben des Kolbens 2c wird das im Druckraum 32c befindliche Hydraulikmedium über den Gehäuseanschluß B zum Wegeventil 6c verdrängt. Über dessen Anschluß T strömt das verdrängte Öl über die Leitung 60 zum Anschluß A des Wegeventiles 5c und von dort über dessen Anschluß T direkt in den Tank T.

Wird der Kolben 2c aus der Stellung III in die Stellung I in einem Zuge verstellt, dann bleibt das Wegeventil 5c in der Schaltstellung a, während die beiden anderen Wegeventile 4c und 6c jeweils umgeschaltet werden. Nunmehr kann das Hydraulikmedium von der Druckmittelquelle Q über das Wegeventil 6c und den Gehäuseanschluß B in den Druckraum 32c strömen, wodurch über Druckmittelbeaufschlagung des Kolbensteges 17c der Kolben 2c in Richtung auf die Stellung I verschoben wird. Das im Druckraum 48c befindliche Hydraulikmedium wird über den Gehäuseanschluß A zum Anschluß A des Wegeventiles 4c und über dessen Anschluß T sowie über die Leitung 60 zum Anschluß A des Wegeventiles 5c und von dort zum Tank T zurückgeführt.

Im Ausführungsbeispiel sind drei Stellungen für den Kolben 2c vorgesehen. Selbstverständlich kann er auch in mehr als drei Schaltstellungen verstellt werden. Das Gehäuse 1c ist dafür mit einer entsprechenden Zahl von weiteren Anschlüssen M und zugehörigen Ventilen ausgestattet. Im Vergleich zu den zuvor beschriebenen Ausführungsbeispielen nach den Fig. 1 bis 3, bei denen ein Hilfskolben vorgesehen ist, zeichnet sich die Ausführungsform nach Fig. 4 durch ihre konstruktive Einfachheit und das kleinstmögliche Bauvolumen aus. Durch das Verhältnis von 1:1 der beaufschlagten Kolbenringflächen 53 und 61 ergibt sich der kleinstmögliche Ölbedarf, der halb so groß bzw. ein Drittel so groß ist wie bei den zuvor beschriebenen Ausführungsbeispielen. Um mehr als drei Stellungen zu erreichen, sind keine zusätzlichen Teile für den Stellzylinder erforderlich.

Die Stellantriebe nach den Fig. 1 bis 4 arbeiten linear, d.h. der Hauptkolben wird axial verschoben. Im folgenden werden Stellantriebe beschrieben, die rotatorisch arbeiten, dadurch nur wenig Raum beanspruchen und dementsprechend kompakt ausgebildet sind.

Der Stellantrieb gemäß den Fig. 5 bis 8 hat ein zylindrisches Gehäuse 1d, das durch einen Ring 62 und zwei an seinen beiden Seiten anliegende ringförmige Scheiben 63 und 64 gebildet wird. Wie Fig. 6 zeigt, sind der Ring 62 und die zu seinen beiden Seiten liegenden Scheiben 63 und 64 vorteilhaft lösbar mit Schrauben 65 verbunden, die vorteilhaft verteilt über den Umfang des Gehäuses 1d vorgesehen sind. Der Ring 62 und die Ringscheiben 63, 64 haben eine gemeinsame zylindrische Außenwandung, während die Ringscheiben 63, 64 den Ring 62 radial nach innen überragen. Die Ringscheiben 63, 64 liegen mit ihrem radial inneren Rand abgedichtet auf einer Lagerbuchse 66, die mit einem Ringsteg 67 zwischen die Ringscheiben 63, 64 ragt. Wie Fig. 6 zeigt, liegen die Ringscheiben 63, 64 am Ringsteg 67 an. Die Lagerbuchse 66 ist innenseitig mit einer axial verlaufenden Nut 68 versehen (Fig. 5), in die in montierter Lage des Stellantriebes eine entsprechende Paßfeder einer Schaltwelle eingreift.

Auf der inneren Zylinderfläche des Ringes 62 ist ein im Ausführungsbeispiel etwa über 180° sich erstreckender Steg 69 vorzugsweise lösbar befestigt (Fig. 5). Seine axiale Breite entspricht dem Abstand zwischen den einander zugewandten Innenseiten der Ringscheiben 63 und 64 (Fig. 6). Zwischen dem Steg 69 und dem Ringsteg 67 der Lagerbuchse 66 ist ein Stellflügel 70 vorgesehen, der fest mit der Lagerbuchse 66 verbunden ist. Er liegt an der radialen Innenseite des Steges 69 an und wird in noch zu beschreibender Weise in Umfangsrichtung verschoben. Der Stellflügel 70 erstreckt sich über einen Winkelbereich von etwa 130° und hat radial verlaufende Stirnseiten 71 und 72 (Fig. 5). Der Stellflügel 70 ist in noch zu beschreibender Weise relativ zum Gehäuse 1d und seinem Steg 69 drehbar.

Im Gehäuse 1d ist außerdem ein Hilfsflügel 73 untergebracht, der sich über einen Winkelbereich von etwa 90° erstreckt und radial verlaufende Stirnseiten 74 und 75 aufweist. Diese Stirnseiten 74 und 75 sind größer als die Stirnseiten 71 und 72 des Stellflügels 70. Wie Fig. 5 zeigt, erstrecken sich die Stirnseiten 74, 75 des Hilfsflügels in Radialrichtung zwischen der zylindrischen Innenseite 76 des Ringes 62 und der zylindrischen Außenseite 77 des Ringsteges 67 der Lagerbuchse 66. Der Hilfsflügel 73 liegt an der Ringinnenseite 76 und an der Ringstegaußenseite 77 an und kann innerhalb des Gehäuses 1d in Umfangsrichtung verstellt werden.

Der Stellflügel 70 erstreckt sich in Radialrichtung vom Steg 69 aus bis zur Außenseite 77 des Ringsteges 67 der Lagerbuchse 66.

Auf der Innenseite 76 des Ringes 62 ist ein Anschlag 78 befestigt, der ebenso wie der Stellflügel 70 und der Hilfsflügel 73 zwischen den beiden Ringscheiben 63 und 64 liegt. Der Anschlag 78 erstreckt sich im Ausführungsbeispiel von der Ringinnenseite 76 bis zur Außenseite 77 des Ringsteges 67 der Lagerbuchse 66 (Fig. 5). Der Anschlag 78 erstreckt sich über einen Winkelbereich von etwa 45° und hat radial liegende Stirnseiten 79 und 80. Im Anschluß an die Innenseite 76 des Ringes 62 sind die Stirnseiten 79 und 80 jeweils mit einer Vertiefung 81 und 82 versehen, in die der Anschluß M sowie der Anschluß B münden, die im Gehäuse 1d vorgesehen sind. Es weist außerdem noch den Anschluß A auf, der nahe der radialen Stirnseite 85 des Steges 69 mündet. Die andere radiale Stirnseite 86 des Steges 69 liegt in Höhe der Mündung des Anschlusses B und etwa in radialer Verlängerung der Stirnseite 80 des Anschlages 78.

Fig. 8 zeigt die Stellung I, in der der Hilfsflügel 73 mit seiner Stirnseite 74 an der Stirnseite 79 des Anschlages 78 anliegt. Der Stellflügel 70 liegt mit seiner Stirnseite 71 an der anderen Stirnseite 75 des Hilfsflügels 73 an.

Soll nun der Stellflügel 70 aus der Stellung I (Fig. 8) in die Stellung II (Fig. 5) verstellt werden, dann wird über den Anschluß M Druck aufgebracht, während das Wegeventil 4d des Anschlusses A so geschaltet wird (Schaltstellung b), daß eine Verbindung zum Tank T besteht. Auch das Wegeventil 6d des Anschlusses B wird so geschaltet (Schaltstellung b), daß die Verbindung zum Tank T hergestellt wird. Dies hat zur Folge, daß über den Druckaufbau im Druckraum 87 zwischen dem Anschlag 78 und der Stirnseite 74 des Hilfsflügels 73 die Stirnseite 74 des Hilfsflügels 73 mit Druckmedium beaufschlagt wird. Der Hilfsflügel 73 wird darum um die Achse des Gehäuses 1d im Uhrzeigersinn verstellt, wobei er den an ihm anliegenden Stellflügel 70 mitnimmt. Das im Druckraum 88 (Fig. 8) befindliche Hydraulikmedium wird über den Anschluß A zum Tank T verdrängt. In gleicher Weise wird im Druckraum 89 das Hydraulikmedium über den Anschluß B zum Tank T verdrängt. Der Druckraum 88 ist im Bereich zwischen dem Steg 69 des Gehäuses 1d und der Stirnseite 75 des Hilfsflügels 73 und der Druckraum 89 im Bereich zwischen dem Anschlag 78 und dem Stellflügel 70 vorgesehen. Der Hilfsflügel 73 wird so lange verstellt, bis er mit seiner Stirnseite 75 an der Stirnseite 71 des Steges 69 des Gehäuses 1d anschlägt. Dann ist die Stellung II gemäß Fig. 5 erreicht.

Soll nunmehr die Stellung III (Fig. 7) erreicht werden, dann wird der Anschluß A mit Druck beaufschlagt. Der Anschluß M bleibt weiterhin druckbeaufschlagt, während der Anschluß B weiterhin druckentlastet bleibt. Die beiden Stirnseiten 74 und 75 des Hilfsflügels 73 sind gleich groß und im Ausführungsbeispiel doppelt so groß wie die Stirnseiten 71, 72 des Stellflügels 70. Bei Beaufschlagung der Anschlüsse A und M mit gleichem Druck bleibt darum der Hilfsflügel 73 in seiner Anlagestellung am Steg 69. Der Stellflügel 70 hingegen wird infolge der Druckbeaufschlagung über den Anschluß A und der Druckentlastung des Anschlusses B weiter im Uhrzeigersinn gedreht, bis er mit seiner Stirnseite 72 an der Stirnseite 80 des Anschlages 78 zur Anlage kommt. Das im Druckraum 89 befindliche Druckmedium wird hierbei über den Anschluß B zum Tank T verdrängt.

Soll ausgehend von der Stellung III wieder die Stellung II (Fig. 5) erreicht werden, wird über den Anschluß B Druck aufgebaut, während der Anschluß A druckentlastet wird. Infolge des Druckaufbaus über den Anschluß B wird der Stellflügel 73 entgegen dem Uhrzeigersinn so lang verdreht, bis er mit seiner Stirnseite 71 an der Stirnseite 75 des Hilfsflügels 73 zur Anlage kommt. Da der Anschluß A druckentlastet ist, wird bei der Verstellung des Stellflügels 70 das im Druckraum 88 befindliche Medium über den Anschluß A zum Tank T verdrängt. Der Hilfsflügel 73 wird infolge der Druckmittelbeaufschlagung seiner größeren Stirnseite 74 über den Anschluß M in seiner Anschlagstellung am Steg 69 gehalten.

Um die Stellung I (Fig. 8) wieder zu erreichen, wird das Wegeventil 4d so umgeschaltet, daß der Anschluß A drucklos wird. Das Wegeventil 5d des Anschlusses M wird so geschaltet, daß eine Verbindung zum Tank T entsteht. Das Wegeventil 6d des Anschlusses B bleibt in seiner geschalteten Stellung a, so daß weiterhin der Stellflügel 70 an seiner Stirnseite 72 mit Druckmittel beaufschlagt wird. Der Stellflügel 70 wird dann im Gegenuhrzeigersinn verstellt und nimmt hierbei den Hilfsflügel 73 so weit mit, bis er mit seiner Stirnseite 74 an der Stirnseite 79 des Anschlages 78 anschlägt (Fig. 8).

Dieser Stellantrieb läßt sich auch besonders teilesparend herstellen. Der Ring 62, der Anschlag 78 und der Steg 69 können einteilig miteinander ausgebildet und gefertigt werden. Auch die Lagerbuchse 66 und der Stellflügel 70 können einteilig miteinander ausgebildet und gefertigt werden. Hierbei können diese Teile vorteilhaft in Paketen im Drahterodierverfahren hergestellt werden, so daß beispielsweise in einem Arbeitsgang zehn oder zwanzig gleiche Teile gefertigt werden können. Auf diese Weise ist eine besonders kostengünstige Herstellung dieses rotatorisch arbeitenden Stellantriebes möglich.

Die Arbeitsweise dieses rotatorischen Stellantriebes entspricht dem Ausführungsbeispiel gemäß Fig. 2, das einen linear arbeitenden Stellantrieb zeigt.

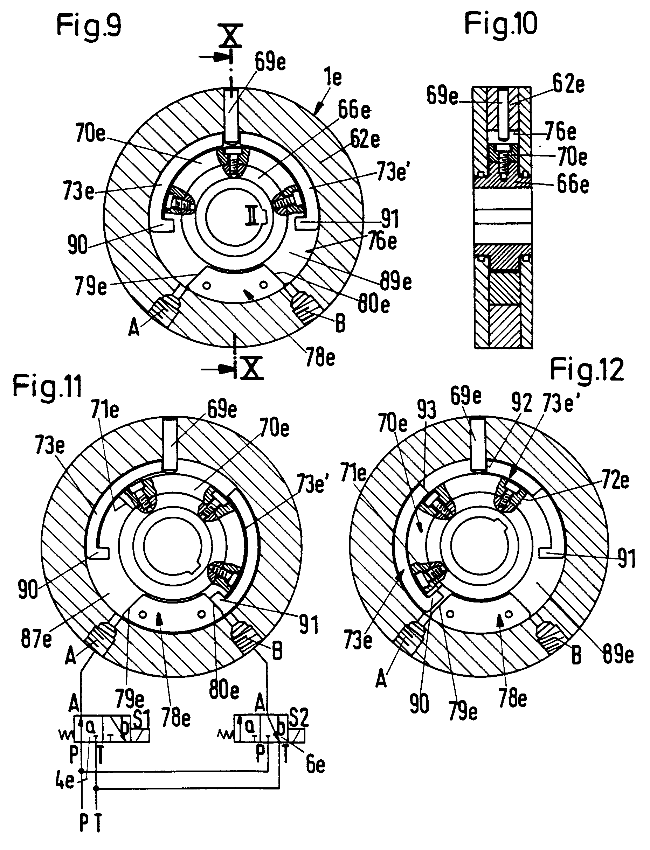

Der rotatorisch arbeitende Stellantrieb gemäß den Fig. 9 bis 12 entspricht hinsichtlich seiner Wirkungsweise dem linear arbeitenden Stellantrieb gemäß Fig. 3. Dieser Stellantrieb hat im wesentlichen die gleiche Gehäuseausbildung wie die Ausführungsform gemäß den Fig. 5 bis 8. Es fehlt allerdings der Steg 69, der als Anschlag für den Hilfsflügel dient. Stattdessen ist als Anschlag 69e ein radial sich erstreckender Bolzen vorgesehen, der in den Ring 62e des Gehäuses 1e eingesetzt ist und radial über die zylindrische Innenseite 76e des Ringes 62e ragt.

Diesem Anschlag 69e liegt diametral der Anschlag 78e gegenüber, der in Umfangsrichtung breiter ist als bei der vorigen Ausführungsform. Seine beiden Stirnseiten 79e und 80e erstrecken sich über die gesamte radiale Breite des Anschlages 78e. Die Anschlüsse A und B münden im Bereich neben den Stirnseiten 79e, 80e des Anschlages 78e.

Der Stellflügel 70e ist wiederum mit der Lagerbuchse 66e fest verbunden.

Auf dem Stellflügel 70e sind zwei Hilfsflügel 73e, 73e' verschiebbar gelagert, die jeweils als Ringabschnitte ausgebildet sind und an ihren voneinander abgewandten Enden einen radial nach innen gerichteten Flansch 90 und 91 aufweisen. Die beiden Hilfsflügel 73e, 73e' liegen an der Innenseite 76e des Gehäuseringes 62e sowie an der Außenseite des Stellflügels 70e an.

An die Anschlüsse A und B sind die Wegeventile 4e und 6e angeschlossen.

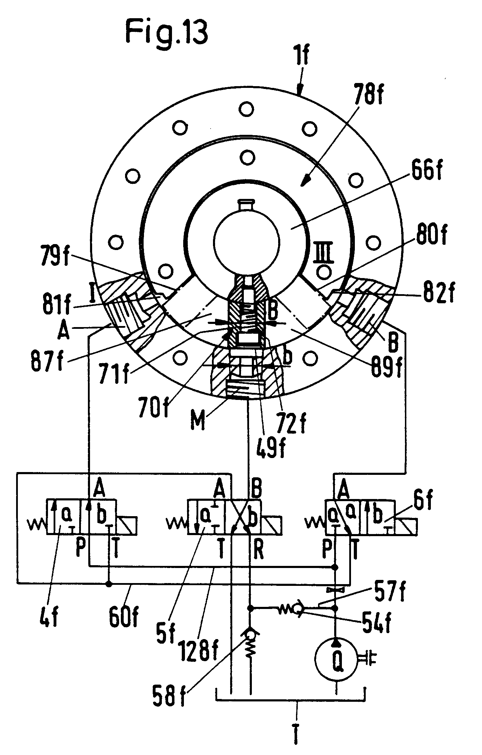

In der Stellung I (Fig. 12) liegt der Hilfsflügel 73e mit seinem Flansch 90 an der Stirnseite 79e des Anschlages 78e an. Der Stellflügel 70e liegt außerdem mit seiner Stirnseite 71e an der Innenseite des Flansches 90 an. Der andere Hilfsflügel 73e' liegt mit seiner vom Flansch 91 abgewandten Stirnseite 92 am Anschlag 69e an, der radial bis nahe an den Stellflügel 70e reicht. Um den Stellflügel 70e in die Stellung II gemäß Fig. 9 zu verstellen, wird das Wegeventil 4e so geschaltet, daß das Hydraulikmedium unter Druck über den Anschluß A zugeführt wird. Auch das Wegeventil 6e ist so geschaltet, daß der Druckraum 89e unter Druck gesetzt wird. Die vom Druckmedium über den Anschluß A beaufschlagten Flächen von Hilfsflügel 73e und Stellflügel 70e sind im Beispiel zusammen gleich groß wie die Anschlagfläche 79e. Die über den Anschluß B vom Druckmedium belastete Fläche 72e des Stellflügels 70e ist halb so groß wie die Anschlagfläche 80e, die gleich groß ist wie die Anschlagfläche 79e. Dies hat zur Folge, daß der Hilfsflügel 73e' in Anlage am Anschlag 69e bleibt, während der Hilfsflügel 73e im Uhrzeigersinn verstellt wird. Hierbei wird über den Flansch 90 der Stellflügel 70e mitgenommen. Je nach Toleranzen schlägt entweder der Stellflügel 70e mit seiner Stirnseite 72e am Flansch 91 des Hilfsflügels 73e' oder der Hilfsflügel 73e mit seiner Stirnseite 93 am Anschlag 69e an. Dann ist eine definierte Stellung II des Stellflügels 70e erreicht. Da der Hilfsflügel 73e' unter dem Druck des Hydraulikmediums im Druckraum 89e steht, wird dieser Hilfsflügel und damit auch der Stellflügel 70e zuverlässig in seiner Stellung II gehalten.

Um den Stellflügel 70e weiter in die Stellung III (Fig. II) zu verstellen, wird das Wegeventil 6e des Anschlusses B so geschaltet, daß eine Verbindung zum Tank T hergestellt wird. Das Wegeventil 4e bleibt so geschaltet, daß der Druck im Druckraum 87e aufrechterhalten bleibt. Der Stellflügel 70e wird dadurch weiter im Uhrzeigersinn verstellt und nimmt über den Flansch 91 den Hilfsflügel 73e' mit. Die Stellung III ist erreicht, wenn dieser Hilfsflügel 73e' mit seinem Flansch 91 an der Stirnseite 80e des Anschlages 78e zur Anlage kommt.

Soll der Stellflügel 70e aus der Stellung III wieder in die Stellungen II bzw. I verstellt werden, werden die Wegeventile 4e und 6e entsprechend umgeschaltet. So wird das Wegeventil 6e so geschaltet, daß das Druckmedium über den Anschluß B den Flansch 91 des Hilfsflügels 73e' und die Stirnseite 72e des Stellflügels 70e beaufschlagt. Der Anschluß A bleibt druckbelastet, so daß der Hilfsflügel 73e in Anlage am Anschlag 69e gehalten und der Stellflügel 70e über seine Stirnseite 71e beaufschlagt wird. Der Hilfsflügel 73e' und der Stellflügel 70e werden entgegen dem Uhrzeigersinn verstellt, wobei der Hilfsflügel mit seinem Flansch 91 am Stellflügel 70e anliegt. Je nach Toleranzen schlägt entweder der Hilfsflügel 73e' am Anschlag 69e oder der Stellflügel 70e mit seiner Stirnseite 71e am Flansch 90 des Hilfsflügels 73e an. Dann ist wieder die Stellung II erreicht.

Um den Stellflügel 70e weiter bis in die Stellung I zu verstellen, wird nunmehr der Anschluß A druckentlastet, so daß der Stellflügel 70e infolge des im Druckraum 89e herrschenden Druckes im Gegenuhrzeigersinn weiter verstellt wird und über den Flansch 90 den Hilfsflügel 73e mitnimmt, bis er an der Stirnseite 79e des Anschlages 78e anschlägt.

Fig. 13 zeigt einen rotatorisch arbeitenden Stellantrieb, der in seiner Funktionsweise dem linear arbeitenden Stellantrieb gemäß den Fig. 4a bis 4f entspricht. Das Gehäuse 1f ist einfacher ausgebildet als bei den zuvor beschriebenen Ausführungsbeispielen, da die Hilfsflügel entfallen. Die Lagerbuchse 66f hat gleiche Ausbildung wie bei den vorhergehenden Ausführungsformen und ist vom Anschlag 78f über mehr als einen Winkelbereich von 180°, im Ausführungsbeispiel von etwa 250°, umgeben. Die beiden Stirnseiten 79f und 80f des Anschlages 78f bilden Anschläge für den Stellflügel 70f, der wiederum fest mit der Lagerbuchse 66f verbunden ist. Die radiale Breite des Stellflügels 70f entspricht dem radialen Abstand zwischen dem Gehäusering und der Lagerbuchse. Das Gehäuse 1f ist mit den Anschlüssen A, M und B versehen, die mit den Wegeventilen 4f bis 6f verbunden sind. Zwischen den Stirnseiten 79f und 80f des gehäusefesten Anschlages 78f und den jeweils benachbarten radialen Stirnseiten 71f und 72f des Stellflügels 70f liegen die Druckräume 87f und 89f.

In Fig. 13 ist mit ausgezogenen Linien die Stellung II dargestellt, während mit den strichpunktierten Linien die Stellungen I und III des Stellflügels 70f angedeutet sind.

Die Anschlüsse A und B münden im Bereich der Stirnseiten 79f und 80f des Anschlages 78f. In diesem Bereich sind die Stirnseiten jeweils mit einer Vertiefung 81f, 82f versehen, so daß das Hydraulikmedium in die Druckräume auch dann gelangen kann, wenn der Stellflügel 70f an den entsprechenden Stirnseiten des Anschlages 78f anliegt.

Liegt der Stellflügel 70f an der Stirnseite 79f des Anschlages 78f an, dann entspricht dies beispielsweise der Stellung I. Um den Stellflügel 70f aus dieser Stellung I in die mittlere Stellung II (ausgezogene Linien in Fig. 13) zu verstellen, werden die Wegeventile 4f und 5f in die Schaltstellung b gebracht, während das Wegeventil 6f in die Schaltstellung a verstellt wird. Über die Druckmittelquelle Q strömt das Hydraulikmedium über die Leitung 128f zum Wegeventil 4f und von dort über den Anschluß A des Gehäuses 1f in den Druckraum 87f. Der Stellflügel 70f wird dadurch belastet und in Richtung auf seine Stellung II im Gegenuhrzeigersinn verschoben. Das im Druckraum 89f befindliche Druckmedium wird zunächst über den Gehäuseanschluß M zum Anschluß B des Wegeventiles 5f und von dort zum Tank T verdrängt. Sobald der Stellflügel 70f mit seiner Steuerkante 72f die entsprechende Kante der Steuerbohrung 49f überfährt und verschließt, ist der Durchgang für das Hydraulikmedium durch den Gehäuseanschluß M gesperrt. Nunmehr kann das Hydraulikmedium nur noch über den Anschluß B des Gehäuses 1f zum Anschluß A des Wegeventiles 6f verdrängt werden.

Über den Anschluß T des Wegeventiles 6f strömt das verdrängte Hydraulikmedium über die Leitung 60f zum Anschluß A des Wegeventiles 5f und von dort über das Widerstandsventil 58f zum Tank T. Im Druckraum 89f herrscht ein geringerer Druck als im Druckraum 87f, so daß der Stellflügel 70f weiter im Gegenuhrzeigersinn verstellt wird. Dadurch gibt der Stellflügel 70f die Steuerbohrung 49f mit der Steuerkante 71f geringfügig frei, so daß der Druck im Druckraum 87f so weit abgebaut werden kann, bis in beiden Druckräumen 87f und 89f gleicher Druck herrscht. Dann nimmt der Stellflügel 70f seine definierte Stellung II ein.

Aus dieser Stellung II kann der Stellflügel 70f weiter im Gegenuhrzeigersinn bis in die Stellung III verstellt werden, in der er an der Stirnseite 80f des Anschlages 78f anliegt. Um diese Verdrehbewegung zu ermöglichen, wird das Wegeventil 5f in die Schaltstellung a gebracht, während das Wegeventil 4f in der Schaltstellung b und das Wegeventil 6f in der Schaltstellung a verbleiben. Damit ist der Gehäuseanschluß M gesperrt, so daß über ihn das Hydraulikmedium nicht aus dem Druckraum 87f abfließen kann. Dadurch wird der Stellflügel 70f weiter im Gegenuhrzeigersinn verdreht, wobei das im Druckraum 89f befindliche Medium über den Gehäuseanschluß B und das Wegeventil 6f in der beschriebenen Weise zum Tank T zurückgeführt wird.

Soll der Stellflügel 70f aus der Stellung III in die Stellung II zurückgestellt werden, dann wird das Wegeventil 6f in die Schaltstellung b, das Wegeventil 4f in die Schaltstellung a und das Wegeventil 5f in die Schaltstellung b verstellt. Das Hydraulikmedium wird von der Druckmittelquelle Q über das Wegeventil 6f und den Anschluß B des Gehäuses 1f in den Druckraum 89f gefördert. Dadurch wird der Stellflügel 70f im Uhrzeigersinn verdreht. Das im Druckraum 87f befindliche Hydraulikmedium wird über den Gehäuseanschluß M zum Anschluß B des Wegeventils 5f und von dort direkt zum Tank T zurückgeführt. Sobald der Stellflügel 70f, dessen Breite B größer als die Querschnittsbreite der Steuerbohrung 49f ist, diese vollständig verschließt, herrscht im Druckraum 89f ein höherer Druck als im Druckraum 87f. Dies hat zur Folge, daß der Stellflügel 70f weiter im Uhrzeigersinn verdreht wird, bis seine Steuerkante 72f die Steuerbohrung 49f geringfügig öffnet. Dann kann der Druck im Druckraum 89f so weit abgebaut werden, daß er gleich groß ist wie der Druck im Druckraum 87f. Dann ist wieder die Stellung II erreicht.

Um den Stellflügel 70f weiter bis zur Stellung I zu verstellen, wird das Wegeventil 5f in die Schaltstellung a verstellt, während die beiden Wegeventile 5f und 6f ihre Schaltstellungen beibehalten. Nunmehr wird das Hydraulikmedium aus dem Druckraum 87f über den Gehäuseanschluß A zum Anschluß A des Wegeventiles 4f und von dort über dessen Anschluß T und die Leitung 60f zum Anschluß A des Wegeventiles 5f und von dort unmittelbar zum Tank T zurückgeführt.

Dieser Bewegungsablauf ist grundsätzlich gleich wie bei dem linear arbeitenden Stellantrieb gemäß den Fig. 4a bis 4f.

Der Stellflügel 70f kann wiederum auch in einem Zuge aus der Stellung III in die Stellung I und umgekehrt verstellt werden. In diesem Falle muß das Wegeventil 5f stets in der Schaltstellung a bleiben, so daß der Gehäuseanschluß M gesperrt ist. Im übrigen erfolgt dann der Bewegungsablauf gleich wie zuvor beschrieben.

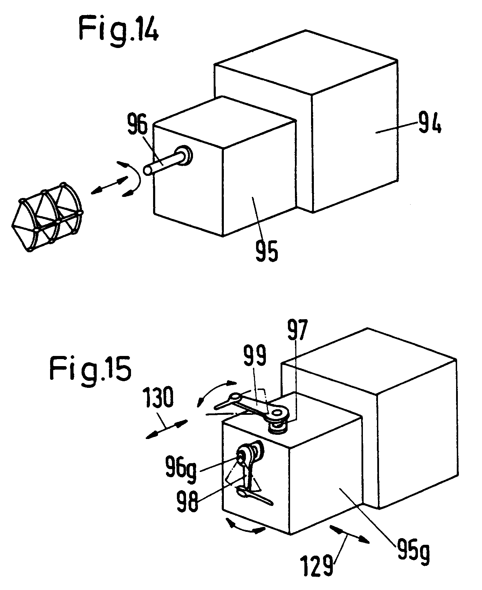

Fig. 14 zeigt in schematischer Darstellung einen Motor 94, beispielsweise einen Verbrennungsmotor eines Kraftfahrzeuges, mit einem Getriebe 95, das eine zentrale Schaltwelle 96 aufweist. Diese Schaltwelle 96 muß nun für die Schaltvorgänge in ihrer Längsrichtung verschoben und außerdem um ihre Achse gedreht werden, was durch die eingezeichneten Pfeile angedeutet ist. Das Verschieben der Schaltwelle 96 ist erforderlich, um in die verschiedenen Gassen des Schaltgetriebes zu gelangen, das Verdrehen, um den gewünschten Gang einzulegen. Je nach konstruktiver Ausbildung des Getriebes 95 kann die Funktion des Verschiebens und Verdrehens der Schaltwelle 96 auch vertauscht sein. Die Abtriebswelle, die aus dem Getriebe 95 herausgeführt ist, ist in Fig. 14 der Übersichtlichkeit wegen nicht dargestellt. Zur Verstellung der Schaltwelle 96 werden die anhand der Fig. 1 bis 13 beschriebenen Stellantriebe eingesetzt, wie im folgenden im einzelnen dargelegt ist.

Fig. 15 zeigt eine Ausführungsform, bei der das Getriebe 95g zwei Schaltwellen 96g und 97 aufweist, die im Beispiel senkrecht zueinander liegen. Die Schaltwelle 96g wird in Richtung des eingezeichneten Doppelpfeiles um ihre Achse gedreht, wofür ein linear arbeitender Stellantrieb herangezogen wird, der in Fig. 15 durch einen entsprechenden Doppelpfeil 129 gekennzeichnet ist.

Auch die andere Schaltwelle 97 wird um ihre Achse gedreht, wofür ebenfalls ein linear arbeitender Stellantrieb herangezogen wird (Doppelpfeil 130). Die Verbindung zwischen der Schaltwelle 96g, 97 erfolgt über Hebel 98 und 99, die drehfest auf der Schaltwelle sitzen und an die die Stellantriebe in noch zu beschreibender Weise angelenkt sind.

Das Getriebe 95g kann auch so ausgebildet sein, daß beide oder nur eine Schaltwelle in ihrer Achsrichtung verschoben wird.

Auch in Fig. 15 ist die Abtriebswelle, die aus dem Getriebe 95g herausgeführt ist, der Übersichtlichkeit wegen nicht dargestellt.

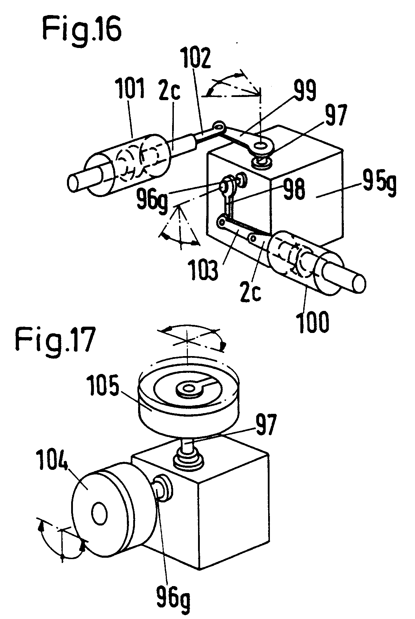

Fig. 16 zeigt nun anhand des Getriebes 95g die Anlenkung zweier linear arbeitender Stellantriebe an die Schaltwellen 96g und 97. Die schematisch dargestellten Stellantriebe 100 und 101 entsprechen der Ausführungsform gemäß den Fig. 4a bis 4f. Um die jeweilige Schaltwelle 96g, 97 zu verdrehen, werden die Hauptkolben 2c der Stellantriebe in der beschriebenen Weise in der gewünschten Richtung axial verschoben. An dem einen Hauptkolbenende ist ein Kupplungsstück 102, 103 befestigt, an dem der Hebel 98, 99 angelenkt ist. Somit läßt sich durch Verschieben des Hauptkolbens 2c die Schaltwelle in der gewünschten Richtung verdrehen. Die Stellantriebe 100, 101 können selbstverständlich auch eine Ausbildung entsprechend den Fig. 1 bis 3 haben.

Bei der Ausführungsform gemäß Fig. 17 sitzen auf den beiden Schaltwellen 96g, 97 rotatorisch arbeitende Stellantriebe 104, 105, die eine Ausbildung entsprechend den Fig. 5 bis 13 haben können. Beispielsweise können die Stellantriebe eine Ausbildung entsprechend den Fig. 5 bis 8 haben. Diese Stellantriebe sitzen dann mit den Lagerbuchsen 66 fest auf den Schaltwellen 96g, 97, die mit einer entsprechenden Paßfeder in die Nut 68 der Lagerbuchse 66 eingreifen. Wie anhand der Fig. 5 bis 8 beschrieben worden ist, können die Flügel 70, 73 innerhalb des Gehäuses 1d des Stellantriebes in der jeweiligen Richtung verdreht werden, wodurch die jeweilige Schaltwelle entsprechend gedreht wird. Das Gehäuse 1d der Stellantriebe 104, 105 ist selbstverständlich entsprechend drehfest gelagert. Im Vergleich zur Ausführungsform nach Fig. 16 mit den linear arbeitenden Stellantrieben 100, 101 nehmen die rotatorisch arbeitenden Stellantriebe 104, 105 nur wenig Raum in Anspruch.

Bei einer weiteren (nicht dargestellten) Ausführungsform kann die eine Schaltwelle verschiebbar und die andere Schaltwelle verdrehbar ausgebildet sein. Auch ist es möglich, beide Schaltwellen lediglich verschiebbar auszubilden.

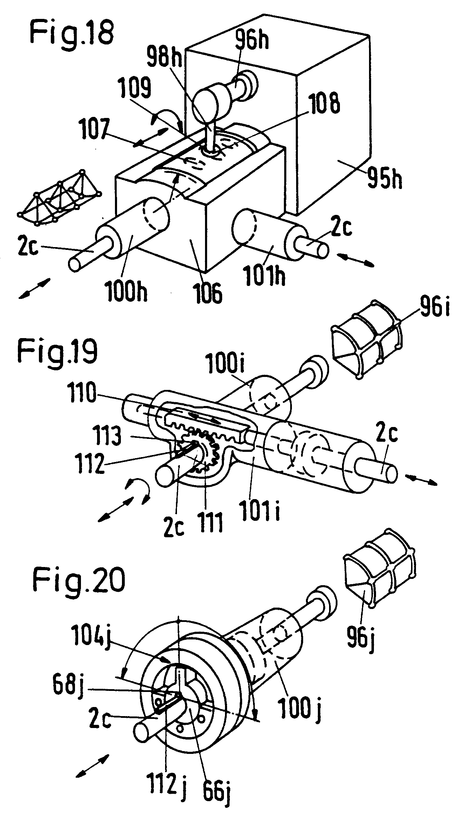

Fig. 18 zeigt eine Ausführungsform, bei der die zentrale Schaltwelle 96h des Getriebes 95h mittels zweier linear arbeitender Stellantriebe 100h, 101h axial verschoben und gedreht werden kann. Die beiden Stellantriebe 100h, 101h sind an eine Schalteinheit 106 angeschlossen, in der ein Schaltelement 107 angeordnet ist. Es ist kolbenförmig ausgebildet und kann in der Schalteinheit 106 in seiner Achsrichtung verschoben und um seine Achse gedreht werden. Das Schaltelement 107 ist mit dem Hauptkolben 2c des Stellantriebes 100h verbunden. Durch Verschieben des Hauptkolbens 2c in Achsrichtung wird das Schaltelement 107 in der Schalteinheit 106 ebenfalls axial verschoben. Auf der Schaltwelle 96h sitzt fest der Hebel 98h, der am freien Ende mit einer Kugel 108 versehen ist, die in eine entsprechend gestaltete Bohrung 109 des Schaltelementes 107 eingreift. Wird das Schaltelement 107 durch die Kolbenstange 2c des Stellantriebes 100h axial verschoben, dann wird über den Hebel 98h die Schaltwelle 96h ebenfalls axial verschoben.

Die Kolbenstange 2c des anderen Stellantriebes 101h liegt quer, vorzugsweise senkrecht zur Achse des Stellantriebes 100h und des Schaltelementes 107 und weist beispielsweise eine (nicht dargestellte) Verzahnung auf, die in eine Gegenverzahnung des Schaltelementes 107 eingreift. Diese Gegenverzahnung ist an der der Vertiefung 109 diametral gegenüberliegenden Seite des Schaltelementes 107 vorgesehen und liegt auf einem Kreissegment, dessen Achse die Achse des Schaltelementes 107 ist. Wird die Kolbenstange 2c des Stellantriebes 101h axial verschoben, dann wird infolge des Eingriffes der Verzahnung der Kolbenstange in die Gegenverzahnung das Schaltelement 107 um seine Achse gedreht. Dabei wird der Hebel 98h entsprechend geschwenkt, wodurch die Schaltwelle 96h in entsprechendem Maße um ihre Achse gedreht wird.

Durch Betätigen des Stellantriebes 101h wird somit die Schaltwelle 96h des Schaltgetriebes in die entsprechende Gasse verstellt. Anschließend wird mit dem Stellantrieb 100h die Schaltwelle 96h in den jeweiligen Gang verstellt. Je nach Getriebeausbildung kann die Schaltwelle 96h mit dem Stellantrieb 100h auch in die Gasse und mit dem Stellantrieb 101h in den Gang verstellt werden.

Fig. 19 zeigt die Möglichkeit, daß die beiden Stellantriebe 100i, 101i, die wiederum linear arbeitende Stellantriebe sind und deren Achsen quer, vorzugsweise senkrecht zueinander liegen, unmittelbar miteinander zusammenwirken. Die Kolbenstange 2c des Stellantriebes 101i weist eine Zahnstange 110 auf, die in ein auf der Kolbenstange 2c des Stellantriebes 100i fest sitzendes Zahnrad 111 eingreift. Der Kolben 2c ist mit einer Paßfeder 112 versehen, die in eine Nut 113 des Zahnrades 111 eingreift. Die Länge der Paßfeder 112 entspricht mindestens der maximalen Verschiebelänge des Kolbens 2c des Stellantriebes 100i. Der Einfachheit halber ist in Fig. 19 das Getriebe nicht dargestellt. Lediglich über das Schaltschema ist die Schaltwelle 96i angedeutet, die fluchtend zum Kolben 2c des Stellantriebes 100i liegt und fest mit ihm verbunden wird. Durch Axialverschieben des Kolbens 2c des Stellantriebes 100i wird die Schaltwelle 96i ebenfalls axial verschoben. Auf diese Weise können die verschiedenen Gänge oder Gassen eingelegt werden. Durch Verschieben des Kolbens 2c des Stellantriebes 101i wird der Kolben 2c des Stellantriebes 100i infolge des Zahnradeingriffes um seine Achse gedreht, wodurch auch die Schaltwelle entsprechend gedreht wird.

Beide Stellantriebe 100i, 101i können ein gemeinsames Gehäuse haben, das im Bereich des Zahnrades 111 eine entsprechende Formgebung aufweist. Dieses Zahnrad ist axial gesichert im Stellantrieb 100i vorgesehen, so daß es ständig in Eingriff mit der Zahnstange 110 des Stellantriebes 101i ist.

Fig. 20 zeigt eine besonders kompakte Ausbildung. Zum Axialverschieben und Drehen der Schaltwelle 96j sind ein linear arbeitender Stellantrieb 100j sowie ein rotatorisch arbeitender Stellantrieb 104j vorgesehen. Er kann entsprechend einer der Ausführungsformen gemäß den Fig. 5 bis 13 ausgebildet sein. Er sitzt mit der Lagerbuchse 66j auf dem Kolben 2c des Stellantriebes 100j. Der Kolben 2c ist mit der Paßfeder 112j versehen, die in die Nut 68j der Lagerbuchse 66j eingreift. Die Länge der Paßfeder 112j entspricht wiederum wenigstens dem maximalen Verschiebeweg des Kolbens 2c, so daß jederzeit eine formschlüssige Verbindung zwischen ihm und der Lagerbuchse 66j gewährleistet ist. Der Stellantrieb 104j ist axial unverschieblich gelagert. Um die Schaltwelle 96j in die jeweilige Gasse bzw. in den jeweiligen Gang zu verdrehen, wird der Stellantrieb 104j betätigt, wodurch über die Lagerbuchse 66j der Kolben 2c um seine Achse gedreht wird. Anschließend wird der Kolben 2c axial verschoben, wodurch die Schaltwelle 96j axial verschoben und damit der jeweilige Gang eingelegt bzw. die jeweilige Gasse ausgewählt werden kann.

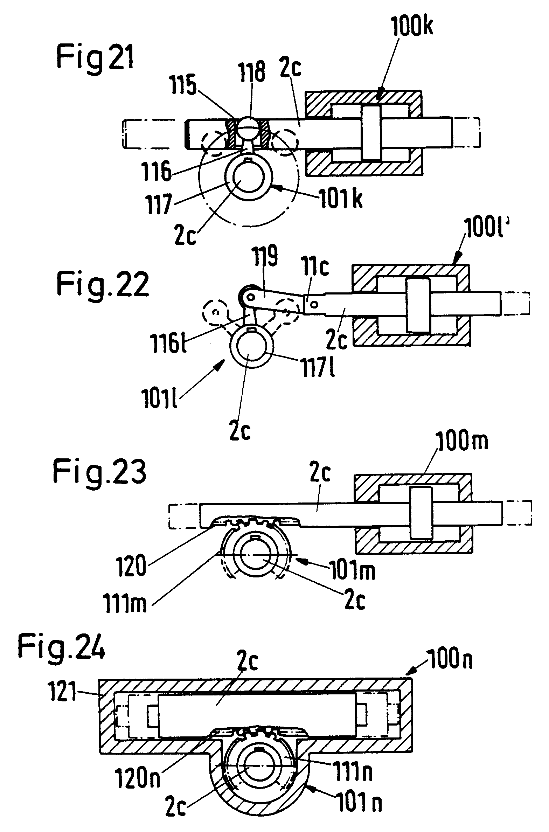

Die Fig. 21 bis 24 zeigen verschiedene Möglichkeiten, um die linear arbeitenden Stellantriebe miteinander zu koppeln.

Bei der in Fig. 21 schematisch dargestellte Ausführungsform hat die Kolbenstange des Kolbens 2c des Stellantriebes 100k an ihrem außerhalb des Gehäuses liegenden Bereich eine diametral sie durchsetzende Bohrung 115, in die ein Hebel 116 eingreift, der radial zum Kolben 2c des Stellantriebes 101k liegt. Der radial abstehende Hebel 116 ist an einem Ring 117 vorgesehen, der drehfest auf der Kolbenstange 2c des Kolbens des Stellantriebes 101k sitzt. Der Kolben 2c dieses Stellantriebes kann axial gegenüber diesem Ring 117 verschoben werden. Am freien Ende ist der Hebel 116 mit einer Kugel 118 versehen, die in der Bohrung 115 liegt. Wird der Kolben 2c des Stellantriebes 100k verschoben, dann wird über den Hebel 116 und den Ring 117 der Kolben 2c des Stellantriebes 101k entsprechend um seine Achse gedreht. Die Kugel 118 wird hierbei innerhalb der Bohrung 115 axial verschoben. Die beiden Endlagen der Kugel 118 bei maximalem Verschiebeweg des Kolbens 2c des Stellantriebes 100k sind in Fig. 21 mit gestrichelten Linien dargestellt. Auf diese Weise kann durch die Verschiebebewegung des Kolbens 2c des Stellantriebes 100 der Kolben 2c des anderen Stellantriebes 101k gedreht werden. Dadurch wird, wie anhand der Fig. 14 bis 20 erläutert worden ist, die mit dem Kolben 2c des Stellantriebes 101k verbundene Schaltwelle in die entsprechende Gassen- bzw. Gangstellung verschwenkt. Wird anschließend der Kolben 2c des Stellantriebes 101k axial verschoben, dann wird die Schaltwelle des Schaltgetriebes in die jeweilige Gang- bzw. Gassenstellung verstellt.

Bei der Ausführungsform gemäß Fig. 22 ist an das Ende 11c des Kolbens 2c des Stellantriebes 100l das eine Ende eines Gelenkhebels 119 angelenkt, dessen anderes Ende an den Hebel 116l des Stellantriebes 101l angelenkt ist. Der Hebel 116l steht radial vom Ring 117l ab, der drehfest auf der Kolbenstange des Kolbens 2c des Stellantriebes 101l sitzt. Durch Verschieben des Kolbens 2c des Stellantriebes 100l wird über den Hebel 116l und den Ring 117l der Kolben 2c des Stellantriebes 117l um seine Achse gedreht. Die beiden Endlagen des Hebels 116l sind wiederum mit gestrichelten Linien dargestellt. Der Kolben 2c des Stellantriebes 101l kann axial in bezug auf den Ring 117l verschoben werden.

Fig. 23 zeigt ein konstruktiv einfaches Ausführungsbeispiel. Der Kolben 2c des Stellantriebes 100m ist im Bereich außerhalb des Gehäuses mit einer Verzahnung 120 versehen, die in ein Zahnrad 111m eingreift, das drehfest auf dem Kolben 2c des Stellantriebes 101m sitzt.

Durch Verschieben des Kolbens 2c des Stellantriebes 100m wird über das Zahnrad 111m die Kolbenstange 2c des Stellantriebes 101m gedreht. Im Gegensatz zu den Ausführungsbeispielen nach den Fig. 21 und 22 greift der Kolben 2c des Stellantriebes 100m unmittelbar in das Zahnrad 111m ein. Das Zahnrad 111m kann, wie in Fig. 23 dargestellt ist, segmentförmig ausgebildet sein.

Beim Ausführungsbeispiel nach Fig. 24 haben die beiden Stellantriebe 100n und 101n das gemeinsame Gehäuse 120n, in dem die beiden Kolben 2c der Stellantriebe untergebracht sind. Der dem Stellantrieb 100n zugeordnete Plungerkolben 2c weist im Bereich zwischen seinen beaufschlagten Flächen die Verzahnung 120n auf, die in das Zahnrad 111n eingreift. Die Arbeitsweise dieses Ausführungsbeispiels entspricht der Arbeitsweise der Ausführungsform gemäß Fig. 23.

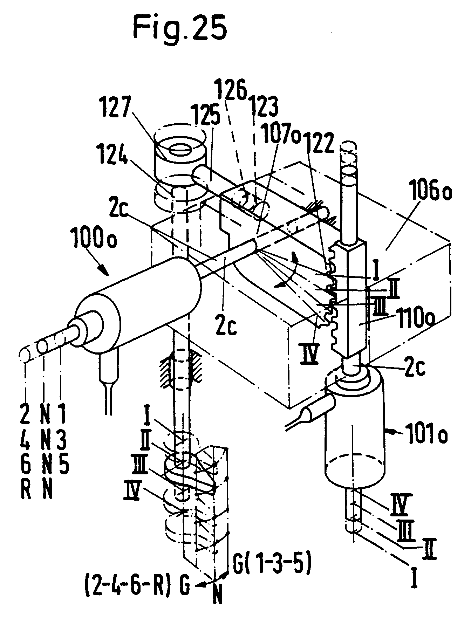

Bei der Ausführungsform gemäß Fig. 25 ist in der Schalteinheit 106o das Schaltelement 107o, das fest auf der Kolbenstange des Kolbens 2c des Stellantriebes 100o sitzt. Auf der Kolbenstange des Kolbens 2c des anderen Stellantriebes 101o sitzt die Zahnstange 110o, die in ein Verzahnungssegment 122 an der einen Stirnseite des Schaltelementes 107o eingreift. An der gegenüberliegenden Stirnseite ist das Schaltelement 107o mit einer Bohrung 123 versehen, in die ein radial zur Schaltwelle 124 sich erstreckender Hebel 125 mit einer Kugel 126 eingreift. Der Hebel 125 steht radial von einem fest auf der Schaltwelle 124 sitzenden Ring 127 ab. Die Schaltwelle erstreckt sich parallel zum Kolben 2c des Stellantriebes 101o.

Durch Verschieben des Kolbens 2c des Stellantriebes 101o wird über die Zahnstange 110o das Schaltelement 107o je nach Verschieberichtung um die Achse des Kolbens 2c des Stellantriebes 100o geschwenkt. Über den in das Schaltelement 107o eingreifenden Hebel 125 und die Kugel 126 wird die Schaltwelle 124 entsprechend axial verschoben. Diese Verschiebebewegung der Schaltwelle 124 kann die sogenannte Shift- oder die Gear-Bewegung sein, mit denen die Gassen und Gänge geschaltet werden.

Durch Verschieben des Kolbens 2c des Stellantriebes 100o wird das fest auf der Kolbenstange des Kolbens sitzende Schaltelement 107o entsprechend verschoben. Dadurch wird über den Hebel 125 und die Kugel 126 die Schaltwelle 124 um ihre Achse gedreht. Diese Verschiebebewegung des Kolbens 2c des Stellantriebes 100o kann die Gear- oder die Shift-Bewegung sein. Die Bohrung 123 im Schaltelement 107o ist so ausgebildet, daß der Hebel 125 und die Kugel 126 die zum Drehen der Schaltwelle 124 notwendige Bewegung ausführen können.

## Patentansprüche

1. Stellantriebssystem für Schaltgetriebe von Kraftfahrzeugen, mit einer Schaltwelle,
dadurch gekennzeichnet, daß zum Verstellen der Schaltwelle (96, 96h bis 96j, 124) zwei miteinander zusammenwirkende Stellantriebe (100, 100h bis 100o; 101, 101h, 101i, 101k bis 101o; 104, 104j; 105) vorgesehen sind, von denen der eine Stellantrieb zum Verschieben und der andere Stellantrieb zum Verdrehen der Schaltwelle vorgesehen ist.

2. Stellantriebssystem nach Anspruch 1,
dadurch gekennzeichnet, daß als Stellantriebe (100, 100h bis 100o; 101, 101h, 101i, 101k bis 101o) Linearantriebe mit einem axial verschiebbaren Stellglied (2, 2a bis 2c) vorgesehen sind.

3. Stellantriebssystem nach Anspruch 1,
dadurch gekennzeichnet, daß als Stellantriebe (104, 104j, 105) Rotationsantriebe mit einem drehbaren Stellglied (70, 70e, 70f) vorgesehen sind.

4. Stellantriebssystem nach Anspruch 1 oder 2,
dadurch gekennzeichnet, daß die axial verschiebbaren Stellglieder (2, 2a bis 2c) der beiden Stellantriebe (100, 100h, 100i, 100k bis 100o; 101, 101h, 101i, 101k bis 101o) des Stellantriebssystems quer, vorzugsweise senkrecht zueinander verstellbar sind.

5. Stellantriebssystem nach Anspruch 4,
dadurch gekennzeichnet, daß die Stellglieder (2c) der beiden Stellantriebe (100h, 100o, 101h, 101o) mit einem Schaltelement (107, 107o) verbunden sind, das mit der Schaltwelle (96h, 124) gekuppelt ist, vorzugsweise drehbar auf dem Stellglied (2c) des einen Stellantriebes (100h, 100o) sitzt und eine Verzahnung (122) aufweist, in die eine Zahnstange (110o) des Stellgliedes (2c) des anderen Stellantriebes (101h, 101o) eingreift.

6. Stellantriebssystem nach Anspruch 5,
dadurch gekennzeichnet, daß das Schaltelement (107, 107o) eine Aufnahme (108, 123) aufweist, in die ein Hebel (98h, 125) der Schaltwelle (96h, 124) eingreift, der vorzugsweise radial von der Schaltwelle (96h, 124) absteht und fest mit ihr verbunden ist.

7. Stellantriebssystem nach einem der Ansprüche 1, 2 oder 4,
dadurch gekennzeichnet, daß die axial verschiebbaren Stellglieder (2c) der beiden Stellantriebe (100i, 100m, 100n; 101i, 101m, 101n) unmittelbar miteinander in Eingriff sind.

8. Stellantriebssystem nach Anspruch 7,
dadurch gekennzeichnet, daß das eine axial verschiebbare Stellglied (2c) ein Zahnstange (110) bzw. eine Verzahnung (120, 120n) aufweist, die in ein Zahnrad (111, 111m, 111n) auf dem axial verschiebbaren Stellglied (2c) des anderen Stellantriebes (100i, 101m, 101n) eingreift.

9. Stellantriebssystem nach Anspruch 8,
dadurch gekennzeichnet, daß das Zahnrad (111, 111m, 111n) drehfest auf dem Stellglied (2c) des anderen Stellantriebes (100i, 101m, 101n) sitzt.

10. Stellantriebssystem nach Anspruch 8 oder 9,
dadurch gekennzeichnet, daß die Zahnstange (110) bzw. die Verzahnung (120n) und das Zahnrad (111, 111n) in einem gemeinsamen Gehäuse (121) untergebracht sind.

11. Stellantriebssystem nach einem der Ansprüche 1 bis 10,
dadurch gekennzeichnet, daß auf dem axial verschiebbaren Stellglied (2c) des einen Stellantriebes (100j) drehfest ein drehbares Stellglied (70, 70e, 70f) des Rotationsantriebs (104j) sitzt.

12. Stellantriebssystem nach einem der Ansprüche 1 bis 11,
dadurch gekennzeichnet, daß das axial verschiebbare Stellglied (2c) des Stellantriebes (100k) eine Aufnahme (115) für einen Hebel (116) aufweist, der radial von einem drehfest auf dem axial verschiebbaren Stellglied (2c) des anderen Stellantriebes (101k) sitzenden Ring (117) absteht und vorzugsweise relativ zur Aufnahme (115) quer zu seiner Längsrichtung gelenkig mit dem die Aufnahme aufweisenden Stellglied (2c) verbunden ist.

13. Stellantriebssystem nach einem der Ansprüche 1 bis 12,
dadurch gekennzeichnet, daß das axial verschiebbare Stellglied (2c) des einen Stellantriebes (111) über einen Gelenkhebel (119) mit dem Hebel (116l) des anderen Stellantriebes (101l) verbunden ist.

14. Stellantriebssystem für Schaltgetriebe von Kraftfahrzeugen, mit mindestens zwei Schaltwellen,
dadurch gekennzeichnet, daß jeder Schaltwelle (96g, 97, 97g) jeweils ein Stellantrieb (100, 104; 101, 105) zugeordnet ist, mit dem die jeweilige Schaltwelle antriebsverbunden ist.

15. Stellantriebssystem nach Anspruch 14,
dadurch gekennzeichnet, daß die Stellantriebe (104, 105) unmittelbar mit den Schaltwellen (96g, 97g) verbunden sind.

16. Stellantriebssystem nach Anspruch 14,
dadurch gekennzeichnet, daß die Stellantriebe (100, 101) über Zwischenglieder (98, 103; 99, 102) mit der jeweiligen Schaltwelle (96g, 97g) verbunden sind.

17. Stellantriebssystem nach einem der Ansprüche 2 und 14 bis 16,
dadurch gekennzeichnet, daß die Stellantriebe (100, 101) Linearantriebe sind.

18. Stellantriebssystem nach einem der Ansprüche 3 und 14 bis 16,
dadurch gekennzeichnet, daß die Stellantriebe (104, 105) Rotationsantriebe sind.

19. Stellantrieb nach einem der Ansprüche 2, 3 und 14 bis 16,
dadurch gekennzeichnet, daß der eine Stellantrieb (100, 101) ein Linearantrieb und der andere Stellantrieb 104, 105) ein Rotationsantrieb ist.
